# EUROPÄISCHE PATENTSCHRIFT

(11) **EP 3 071 658 B1**
(45) Veröffentlichungstag und Bekanntmachung des Hinweises auf die Patenterteilung: **13.12.2017**
(21) Anmeldenummer: 13798279.9
(22) Anmeldetag: 18.11.2013
(51) Int. Cl.: C09D 5/44

(54) **ZWEISTUFIGES VERFAHREN ZUR TAUCHLACK-BESCHICHTUNG ELEKTRISCH LEITFÄHIGER SUBSTRATE UNTER VERWENDUNG EINER BI(III)-HALTIGEN ZUSAMMENSETZUNG**
TWO-STAGE METHOD FOR DIP COATING ELECTRICALLY CONDUCTIVE SUBSTRATES USING A COMPOSITION CONTAINING BI(III)
PROCÉDÉ EN DEUX ÉTAPES DE REVÊTEMENT PAR LAQUE À TREMPER DE SUBSTRATS ÉLECTRIQUEMENT CONDUCTEURS EN UTILISANT UNE COMPOSITION DE BI(III)

(43) Veröffentlichungstag der Anmeldung: 28.09.2016
(73) Patentinhaber: BASF Coatings GmbH, 48165 Münster (DE); Henkel AG & Co. KGaA, 40589 Düsseldorf (DE)
(72) Erfinder: MARKOU,Konstantinos, 50739 Köln (DE); HAMMER, Christian, 40468 Düsseldorf (DE); WAPNER, Kristof, 40589 Düsseldorf (DE); GASPAR, Florian, 42651 Solingen (DE)
(74) Vertreter: BASF IP Association
(86) Internationale Anmeldenummer: PCT/EP2013/074102
(87) Internationale Veröffentlichungsnummer: WO 2015/070929

(56) Entgegenhaltungen:
- WO-A1-00/47642
- WO-A1-03/074618
- WO-A2-93/24578
- DE-A1- 10 236 347

## Beschreibung

Die vorliegende Erfindung betrifft ein Verfahren zur zumindest teilweisen Beschichtung eines elektrisch leitfähigen Substrats mit einem Elektrotauchlack umfassend wenigstens ein Kontaktieren des Substrats mit einer wässrigen Beschichtungszusammensetzung (A) als Schritt (1), welcher in wenigstens zwei aufeinanderfolgenden Stufen (1a) und (1b) durchgeführt wird, nämlich zunächst bei einer angelegten Spannung in einem Bereich von 1 bis 50 V (1a), welche über eine Dauer von wenigstens 5 Sekunden angelegt wird, und dann in einem Bereich von 50 bis 400 V (1b), wobei die in (1b) angelegte Spannung um wenigstens 10 V größer ist als die in (1a) angelegte Spannung, wobei (A) wenigstens ein kathodisch abscheidbares Bindemittel (A1), wenigstens eine organische Mono- oder Polycarbonsäure, welche kein(e) Stickstoffatom(e) aufweist, und/oder deren Anionen (A3) und trivalentes Bismut (A4) umfasst, wobei (A3) und (A4) jeweils in einer solchen Menge in (A) vorhanden sind, dass deren Stöchiometrie zueinander es erlaubt, dass wenigstens 50 mol-% von (A4) in Form eines Salzes und/oder Komplexes aus den Komponenten (A3) und (A4) vorliegt, wobei die molaren Anteile von gegebenenfalls in (A) enthaltenen Zirkonium-Ionen und Aminopolycarbonsäuren jeweils wenigstens um den Faktor 100 bzw. 15 geringer sind als der molare Anteil von in (A) enthaltenem (A4), eine Verwendung von (A) zur zumindest teilweisen Beschichtung des Substrats mit einem Elektrotauchlack und mit dem Verfahren erhältliche zumindest teilweise beschichtete elektrisch leitfähige Substrate sowie aus solchen Substraten hergestellte Gegenstände oder Bauteile.

Im Automobilbereich müssen die zur Herstellung eingesetzten metallischen Bauteile üblicherweise gegen Korrosion geschützt werden. Die Anforderungen an den zu erzielenden Korrosionsschutz sind sehr hoch, insbesondere da seitens der Hersteller oftmals über viele Jahre eine Garantie gegen Durchrostung gewährt wird. Solch ein Korrosionsschutz wird üblicherweise durch eine Beschichtung der Bauteile oder der zu ihrer Herstellung eingesetzten Substrate mit wenigstens einer dafür geeigneten Beschichtung erzielt.

Nachteilig an den bekannten Beschichtungsverfahren, insbesondere an den bekannten in der Automobilindustrie eingesetzten Verfahren, ist, dass diese Verfahren üblicherweise einen Phosphatierungsschritt als Vorbehandlung vorsehen, in dem das zu beschichtende Substrat nach einem optionalen Reinigungsschritt und vor einem Tauchlackierungsschritt mit einem Metallphosphat wie Zinkphosphat in einem Phosphatierungsschritt behandelt wird, um einen ausreichenden Korrosionsschutz zu gewährleisten. Diese Vorbehandlung beinhaltet üblicherweise die Durchführung mehrerer Verfahrensschritte in mehreren verschiedenen und unterschiedlich beheizten Tauchbecken. Zudem fallen bei der Durchführung einer solchen Vorbehandlung Abfallschlämme an, die die Umwelt belasten und entsorgt werden müssen. Es ist daher insbesondere aus ökonomischen und ökologischen Gründen wünschenswert, einen solchen Vorbehandlungsschritt einsparen zu können, aber dennoch zumindest die gleiche Korrosionsschutzwirkung zu erzielen, die mit den bekannten Verfahren erzielt wird.

Aus EP 1 889 952 A1 und EP 1 884 579 A1 sind Verfahren zur Beschichtung von elektrisch leitfähigen Substraten bekannt, die jeweils eine mindestens zweistufige elektrische Abscheidung eines Beschichtungsmittels auf dem Substrat vorsehen. Die eingesetzte Beschichtungszusammensetzung enthält dabei zwingend eine Zirkonium-Verbindung und gegebenenfalls weitere Metallatom-haltige Verbindungen, wobei die Metallatome ausgewählt sind aus der Gruppe bestehend aus Ti, Co, V, W, Mo, Cu, Zn, In, Al, Bi, Y, Lanthanidenmetallen, Alkalimetallen und Erdalkalimetallen. Nachteilig an den aus EP 1 889 952 A1 und EP 1 884 579 A1 bekannten Verfahren ist jedoch, dass die dadurch erhaltenen Zirkonium-haltigen beschichteten Substrate der Anforderung eines ausreichenden Korrosionsschutzes nicht genügen.

EP 2 405 035 A1 und JP 2011-057944 A offenbaren jeweils eine in einem zweistufigen Beschichtungsverfahren elektrophoretisch abscheidbare Beschichtungszusammensetzung, die 100 bis 1000 ppm bzw. 100 bis 5000 ppm an Bismut-Ionen und zwingend eine Aminopolycarbonsäure wie beispielsweise Ethylendiamintetraessigsäure (EDTA) bzw. deren Anionen in der 0,5 bis 10-fachen bzw. 0,1 bis 5-fachen molaren Konzentration, jeweils bezogen auf die molare Konzentration der Bismut-Ionen, enthält. Bei Elektrotauchlackbeschichtungszusammensetzungen führt die Anwesenheit solcher Säuren jedoch zu Nachteilen bezüglich der Badstabilität, da sie nicht durch die üblicherweise verwendeten Dialysemembranen in den Anolytkreislauf überführt werden und sich somit im Tauchlackbad anreichern. Zudem ist an dem Einsatz solcher Aminopolycarbonsäuren nachteilig, dass ihre Gegenwart in Tauchlackbädern zu Problemen bei der Abwasserbehandlung führen kann, wenn diese Säuren - beispielsweise durch Verwerfen von Ultrafiltrat - in die Abwasservorbehandlungsanlagen gelangen. Erreichen die Aminopolycarbonsäuren im Anschluss natürliche Gewässer, so können sie diese durch Mobilisierung von Schwermetallen belasten. Daher sind diese Aminopolycarbonsäuren in Elektrotauchlacksystemen unerwünscht bzw. ihr Anteil darin sollte möglichst gering gehalten werden.

Kathodisch abscheidbare Bismut-haltige Beschichtungszusammensetzungen, die in einem einstufigen Beschichtungsschritt auf ein geeignetes Substrat abgeschieden werden können, sind zudem aus EP 1 000 985 A1, WO 2009/021719 A2, WO 2004/018580 A1, WO 2004/018570 A2, WO 00/34398 A1 sowie WO 95/07319 A1 bekannt. Nachteilig an den darin offenbarten Verfahren ist jedoch, dass die so erhaltenen beschichteten Substrate keinen ausreichenden Korrosionsschutz aufweisen.

DE 102 36 347 A1 offenbart Bismutverbindungen enthaltende Elektrotauchlacke, enthaltend (A) mindestens ein selbstvernetzendes und/oder fremdvernetzendes Bindemittel mit (potentiell) kationischen oder anionischen Gruppen und reaktiven funktionellen Gruppen, die (i) mit sich selbst oder mit im selbstvernetzenden Bindemittel vorhandenen komplementären reaktiven funktionellen Gruppen oder (ii) im Falle des fremdvernetzenden Bindemittels mit in Vernetzunasmitteln (B) vorhandenen komplementären reaktiven funktionellen Gruppen thermische Vernetzunqsreaktionen eingehen können, (B) gegebenenfalls mindestens ein Vernetzungsmittel, enthaltend die komplementären reaktiven funktionellen Gruppen, und (C) mindestens eine Bismutverbindung.

WO 03/074618 A1 offenbart Von unlöslichen Festkörpern freien Elektrotauchlacke (ETL), enthaltend (A) mindestens ein selbstvernetzendes und/oder fremdvernetzendes Bindemittel mit (potenziell) kationischen oder anionischen Gruppen und reaktiven funktionellen Gruppen, die (i) mit sich selbst oder mit im selbstvernetzenden Bindemittel vorhandenen komplementären reaktiven funktionellen Gruppen oder (ii) im Falle des fremdvernetzenden Bindemittels mit in Vernetzungsmitteln (B) vorhandenen komplementären reaktiven funktionellen Gruppenthermische Vernetzungsreaktionen eingehen können, (B) gegebenenfalls mindestens ein Vernetzungsmittel, enthaltend die komplementären reaktiven funktionellen Gruppen, und (C) mindestens ein Dialkylzinndicarboxylat.

WO 00/47642 A1 offenbart einen Katalysator zum Vernetzen eines kationischen Harzes mit einem blockierten Isocyanat mit niedriger Umwelttoxizität und mit Aktivität in wasserbasierten Lacken, wobei der Katalysator ein Salz von Bismut und einer Carbonsäure mit einer Kohlenwasserstoffkette von 11 bis 36 Kohlenstoffatomen und einem Molekulargewicht von 165 bis 465 enthält.

WO 93/24578 A2 offenbart katalysierte, nach Protonisieruna wasserverdünnbare, kationische Lackbindemittel, die Wismutsalze von aliphatischen Hydroxycarbonsäuren enthalten. Besonders geeignet sind die Wismutsalze der Milchsäure und der Dimethylolpropionsäure. Anwendung finden diese Zusammensetzungen insbesondere in kathodisch abscheidbaren Tauchlacken.

Es besteht daher ein Bedarf an einem Verfahren zur zumindest teilweisen Beschichtung eines elektrisch leitfähigen Substrats, welches - insbesondere im Hinblick auf eine Einsparung des üblicherweise durchgeführten Phosphatierungsschritts als Vorbehandlung - ökonomischer und ökologischer durchgeführt werden kann als die herkömmlichen Verfahren, aber dennoch zumindest in gleichem Maße dazu geeignet ist, die erforderliche Korrosionsschutzwirkung zu erzielen. Zudem besteht ein Bedarf an einem entsprechenden Verfahren, mit welchem eine gegenüber üblicherweise eingesetzten Verfahren verbesserte Korrosionsschutzwirkung erzielt werden kann.

Eine Aufgabe der vorliegenden Erfindung ist es daher, ein Verfahren zur zumindest teilweisen Beschichtung eines elektrisch leitfähigen Substrats zur Verfügung zu stellen, welches gegenüber dem aus dem Stand der Technik bekannten Verfahren Vorteile aufweist.

Insbesondere ist es eine Aufgabe der vorliegenden Erfindung, ein solches Verfahren bereitzustellen, welches eine ökonomischere und ökologischere Beschichtung als herkömmliche Beschichtungsverfahren ermöglicht, d.h. welches es beispielsweise ermöglicht, auf die üblicherweise noch vor einer Tauchlackierung mittels eines Metallphosphats durchzuführende Phosphatierung zu verzichten, aber mit welchem dennoch die zumindest gleiche und insbesondere eine verbesserte Korrosionsschutzwirkung erzielt werden kann, die mit den üblichen Verfahren erzielt wird.

Diese Aufgabe wird gelöst durch die in den Patentansprüchen beanspruchten Gegenstände sowie den in der nachfolgenden Beschreibung beschriebenen bevorzugten Ausführungsformen dieser Gegenstände.

Ein erster Gegenstand der vorliegenden Erfindung ist daher ein Verfahren zur zumindest teilweisen Beschichtung eines elektrisch leitfähigen Substrats mit einem Elektrotauchlack umfassend wenigstens einen Schritt (1),
(1) Kontaktieren des als Kathode geschalteten elektrisch leitfähigen Substrats mit einer wässrigen Beschichtungszusammensetzung (A),
   wobei Schritt (1) in wenigstens zwei aufeinanderfolgenden Stufen (1a) und (1b) durchgeführt wird, nämlich
   (1a) bei einer angelegten Spannung in einem Bereich von 1 bis 50 V, welche über eine Dauer von wenigstens 5 Sekunden angelegt wird, und
   (1b) bei einer angelegten Spannung in einem Bereich von 50 bis 400 V, unter der Bedingung, dass die in Stufe (1b) angelegte Spannung um wenigstens 10 V größer ist als die in Stufe (1a) angelegte Spannung, und
      wobei die wässrige Beschichtungszusammensetzung (A)
      (A1) wenigstens ein kathodisch abscheidbares Bindemittel,
      (A2) gegebenenfalls wenigstens ein Vernetzungsmittel,
      (A3) wenigstens eine organische Mono- oder Polycarbonsäure, welche kein(e) Stickstoffatom(e) aufweist, und/oder deren Anionen, und
      (A4) trivalentes Bismut, d.h. Bi(III),
      umfasst, wobei die wenigstens eine organische Mono- oder Polycarbonsäure (A3) und/oder deren Anionen und das trivalente Bismut als Komponente (A4) jeweils in einer solchen Menge in der wässrigen Beschichtungszusammensetzung (A) vorhanden sind, dass deren Stöchiometrie zueinander es erlaubt, dass wenigstens 50 mol-% des trivalenten Bismuts in Form eines Salzes und/oder Komplexes, vorzugsweise eines Salzes, aus den Komponenten (A3) und (A4) vorliegt,
   dadurch gekennzeichnet, dass
   der molare Anteil von gegebenenfalls in der wässrigen Beschichtungszusammensetzung (A) enthaltenen Zirkonium-Ionen wenigstens um den Faktor 100 geringer ist als der molare Anteil des in der wässrigen Beschichtungszusammensetzung (A) enthaltenen trivalenten Bismuts, und
   der molare Anteil von gegebenenfalls wenigstens einer in der wässrigen Beschichtungszusammensetzung (A) enthaltenen Aminopolycarbonsäure wenigstens um den Faktor 15 geringer ist als der molare Anteil des in der wässrigen Beschichtungszusammensetzung (A) enthaltenen trivalenten Bismuts.

Die erfindungsgemäß eingesetzte wässrige Beschichtungszusammensetzung (A) dient somit zur Herstellung einer Elektrotauchlackschicht auf einer Substratoberfläche eines elektrisch leitfähigen Substrats.

Es wurde überraschend gefunden, dass es das erfindungsgemäße Verfahren ermöglicht, auf den üblicherweise vor der Tauchlackierung, insbesondere Elektrotauchlackierung, durchzuführenden erforderlichen Schritt einer Vorbehandlung des zumindest teilweise zu beschichtenden elektrisch leitfähigen Substrats mit einem Metallphosphat wie Zinkphosphat zur Ausbildung einer Metallphosphatschicht auf dem Substrat verzichten zu können, wodurch das entsprechende Beschichtungsverfahren damit insgesamt sowohl ökonomischer, insbesondere weniger zeit- und kosten-intensiv, als auch ökologischer als herkömmliche Verfahren gestaltet werden kann.

Insbesondere wurde überraschend gefunden, dass es das erfindungsgemäße Verfahren ermöglicht, zumindest teilweise mit einem Elektrotauchlack beschichtete elektrisch leitfähige Substrate zur Verfügung zu stellen, die im Vergleich zu mittels herkömmlicher Verfahren entsprechend beschichteter Substrate hinsichtlich ihrer Korrosionsschutzwirkung zumindest keine Nachteile und insbesondere Vorteile aufweisen: so zeichnen sich die mit dem erfindungsgemäßen Verfahren hergestellten beschichteten Substrate, gegenüber entsprechenden Vergleichsbeispielen wie beispielsweise mit einem Verfahren gemäß EP 1 889 952 A1 und EP 1 884 579 A1 beschichtete Substrate insbesondere dadurch aus, dass die Unterwanderung als Maß für Korrosionsschutzwirkung signifikant geringer ausfällt.

Es wurde ferner überraschend gefunden, dass es das erfindungsgemäße Verfahren ermöglicht, insbesondere durch den zweistufigen Schritt (1) und innerhalb dieses Schritts (1) durch die Stufe (1a), eine signifikante Beschichtung des Substrats mit Bi, insbesondere von mindestens 10 mg/m² Bi, zu erzielen, was beispielsweise mit einem Verfahren gemäß EP 1 889 952 A1 und EP 1 884 579 A1 nicht erzielt werden kann.

Zudem wurde überraschend gefunden, dass es das erfindungsgemäße Verfahren ermöglicht, beschichtete Substrate mit guter Korrosionsschutzwirkung zur Verfügung zu stellen, und dabei auf den Einsatz umweltschädlicher Verbindungen wie Aminopolycarbonsäure zu verzichten, die sich zudem im Tauchlackbad anreichern können, wodurch eine ausreichende Stabilität des Tauchlackbads nicht gewährleistet ist.

Der Begriff "umfassend" im Sinne der vorliegenden Erfindung, beispielsweise in Zusammenhang mit der erfindungsgemäß eingesetzten wässrigen Beschichtungs-zusammensetzung (A), hat in einer bevorzugten Ausführungsform die Bedeutung "bestehend aus". Dabei können hinsichtlich der erfindungsgemäß eingesetzten Beschichtungszusammensetzung (A) in dieser bevorzugten Ausführungsform eine oder mehrere der weiteren nachstehend genannten optional in der erfindungsgemäß eingesetzten Beschichtungszusammensetzung (A) enthaltenen Komponenten in der Beschichtungszusammensetzung (A) enthalten sein wie - neben (A1), (A3), (A4) und Wasser sowie gegebenenfalls (A2) zum Beispiel die optionalen Komponenten (A5) und/oder (A6) und/oder (A7) sowie gegebenenfalls vorhandene organische Lösemittel. Alle Komponenten können dabei jeweils in ihren vorstehend und nachstehend genannten bevorzugten Ausführungsformen in der erfindungsgemäß eingesetzten Beschichtungszusammensetzung (A) enthalten sein.

### Substrat

Als erfindungsgemäß eingesetztes elektrisch leitfähiges Substrat eignen sich alle üblicherweise eingesetzten und dem Fachmann bekannten elektrisch leitfähigen Substrate. Vorzugsweise sind die erfindungsgemäß eingesetzten elektrisch leitfähigen Substrate ausgewählt aus der Gruppe bestehend aus Stahl, vorzugsweise Stahl ausgewählt aus der Gruppe bestehend aus kalt gewalztem Stahl, verzinktem Stahl wie tauchverzinktem Stahl, legierungsverzinktem Stahl (wie beispielsweise Galvalume, Galvannealed oder Galfan) und aluminiertem Stahl, Aluminium und Magnesium, insbesondere eignen sich verzinkter Stahl und Aluminium. Zudem eignen sich als Substrate warmgewalzter Stahl, hochfester Stahl, Zn/Mg-Legierungen und Zn/Ni-Legierungen. Als Substrate eignen sich insbesondere Teile von Karosserien oder vollständige Karosserien von zu produzierenden Automobilen. Das erfindungsgemäße Verfahren kann auch zur Bandbeschichtung (Coil-Coating) eingesetzt werden. Bevor das jeweilige elektrisch leitfähige Substrat eingesetzt wird, erfolgt vorzugsweise eine Reinigung und/oder Entfettung des Substrats.

Das erfindungsgemäß eingesetzte elektrisch leitfähige Substrat kann ein mit wenigstens einem Metallphosphat vorbehandeltes Substrat sein. Das erfindungsgemäß eingesetzte elektrisch leitfähige Substrat kann zudem ein chromatiertes Substrat sein. Eine solche Vorbehandlung mittels einer Phosphatierung oder Chromatierung, die üblicherweise nach Reinigung des Substrats und vor der Tauchlackierung des Substrats erfolgt, ist insbesondere ein in der Automobilindustrie üblicher Vorbehandlungsschritt. Es ist in diesem Zusammenhang insbesondere wünschenswert, dass eine optional durchgeführte Vorbehandlung unter ökologischen und/oder ökonomischen Gesichtspunkte vorteilhaft ausgestaltet ist. Beispielsweise ist daher ein optionaler Vorbehandlungsschritt möglich, in dem anstelle einer üblichen Trikation-Phosphatierung auf die Nickel-Komponente verzichtet wird und stattdessen eine Dikation-Phosphatierung (enthaltend Zink- und Mangan-Kationen und keine Nickel-Kationen) des erfindungsgemäß eingesetzten elektrisch leitfähigen Substrat noch vor einer Beschichtung mit der wässrigen Beschichtungszusammensetzung (A) durchgeführt wird.

Es ist jedoch gerade eine Aufgabe der vorliegenden Erfindung, dass auf eine solche Vorbehandlung des zumindest teilweise zu beschichtenden elektrisch leitfähigen Substrats mittels Phosphatierung mit einem Metallphosphat wie beispielsweise Zinkphosphat oder mittels einer Chromatierung verzichtet werden kann. In einer bevorzugten Ausführungsform ist das erfindungsgemäß eingesetzte elektrisch leitfähige Substrat daher kein solches phosphatiertes oder chromatiertes Substrat.

Das erfindungsgemäß eingesetzte elektrisch leitfähige Substrat kann noch vor einer Beschichtung mit der erfindungsgemäß eingesetzten wässrigen Beschichtungszusammensetzung (A) mit einer wässrigen Vorbehandlungs-Zusammensetzung vorbehandelt werden, welche wenigstens eine wasserlösliche Verbindung, welche wenigstens ein Ti-Atom und/oder wenigstens ein Zr-Atom enthält, und wenigstens eine wasserlösliche Verbindung als Quelle für Fluorid-Ionen, welches wenigstens ein Fluor-Atom enthält, umfasst, oder mit einer wässrigen Vorbehandlungs-Zusammensetzung, welche eine wasserlösliche Verbindung umfasst, welche durch Umsetzung wenigstens einer wasserlöslichen Verbindung, welche wenigstens ein Ti-Atom und/oder wenigstens ein Zr-Atom enthält, mit wenigstens einer wasserlöslichen Verbindung als Quelle für Fluorid-Ionen, welches wenigstens ein Fluor-Atom enthält, erhältlich ist.

Vorzugsweise weisen das wenigstens eine Ti-Atom und/oder das wenigstens eine Zr-Atom dabei die Oxidationsstufe +4 auf. Vorzugsweise enthält die wässrige Vorbehandlungs-Zusammensetzung aufgrund der in ihr enthaltenen Komponenten, vorzugsweise zudem aufgrund der entsprechend gewählten Mengenanteile dieser Komponenten einen Fluoro-Komplex wie beispielsweise ein Hexfluorometallat, d.h. insbesondere Hexafluorotitanat und/oder wenigstens ein Hexafluorozirkonat. Vorzugsweise weist die Vorbehandlungs-Zusammensetzung eine Gesamtkonzentration an den Elementen Ti und/oder Zr auf, die 2,5·10⁻⁴ mol/L nicht unterschreitet, aber nicht grösser als 2,0·10⁻² mol/L ist. Die Herstellung solcher Vorbehandlungs-Zusammensetzungen und ihr Einsatz in der Vorbehandlung elektrisch leitfähiger Substrat ist beispielsweise aus WO 2009/115504 A1 bekannt.

Vorzugsweise enthält die Vorbehandlungs-Zusammensetzung zudem Kupferionen, vorzugsweise Kupfer(II)-Ionen sowie gegebenenfalls eine oder mehrere wasserlösliche und/oder wasserdispergierbare Verbindungen, die wenigstens ein Metallion ausgewählt aus der Gruppe bestehend aus Ca, Mg, Al, B, Zn, Mn und W sowie Mischungen davon enthält, vorzugsweise wenigstens ein Alumosilikat und hierbei insbesondere ein solches, das ein atomares Verhältnis von Al zu Si-Atomen von zumindest 1:3 aufweist. Die Herstellung solcher Vorbehandlungs-Zusammensetzungen und ihr Einsatz in der Vorbehandlung elektrisch leitfähiger Substrat ist beispielsweise aus WO 2009/115504 A1 bekannt. Die Alumosilikate liegen vorzugsweise als Nanopartikel mit einer durch dynamische Lichtstreuung bestimmbaren mittleren Teilchengröße im Bereich von 1 bis 100 nm. Die durch dynamische Lichtstreuung bestimmbare mittlere Teilchengröße solcher Nanopartikel im Bereich von 1 bis 100 nm wird dabei gemäß DIN ISO 13321 (Datum: 1.10.2004) bestimmt.

In einer bevorzugten Ausführungsform ist das erfindungsgemäß eingesetzte elektrisch leitfähige Substrat jedoch ein Substrat, welches nicht mit einer solchen Vorbehandlungs-Zusammensetzung vorbehandelt worden ist.

### Beschichtungszusammensetzung (A)

Die erfindungsgemäß eingesetzte wässrige Beschichtungszusammensetzung (A) eignet sich zur zumindest teilweisen Beschichtung eines elektrisch leitfähigen Substrats mit einem Elektrotauchlack, d.h. sie ist dazu geeignet, zumindest teilweise in Form einer Elektrotauchlackschicht auf die Substratoberfläche eines elektrisch leitfähigen Substrats aufgebracht zu werden. Vorzugsweise ist die gesamte erfindungsgemäß eingesetzte wässrige Beschichtungszusammensetzung (A) kathodisch abscheidbar.

Die erfindungsgemäß eingesetzten wässrigen Beschichtungszusammensetzungen (A) enthalten als flüssiges Verdünnungsmittel Wasser.

Unter dem Begriff "wässrig" im Zusammenhang mit der Beschichtungszusammensetzung (A) werden vorzugsweise solche flüssigen Beschichtungszusammensetzungen (A) verstanden, die - als flüssiges Verdünnungsmittel, d.h. als flüssiges Lösemittel und/oder Dispergiermittel - Wasser als Hauptkomponente enthalten. Gegebenenfalls können die Beschichtungszusammensetzungen (A) jedoch wenigstens ein organisches Lösemittel in geringen Anteilen enthalten. Als Beispiele für solche organischen Lösemittel seien heterocyclische, aliphatische oder aromatische Kohlenwasserstoffe, ein- oder mehrwertige Alkohole, insbesondere Methanol und/oder Ethanol, Ether, Ester, Ketone und Amide, wie z. B. N-Methylpyrrolidon, N-Ethylpyrrolidon, Dimethylformamid, Toluol, Xylol, Butanol, Ethyl- und Butylglykol sowie deren Acetate, Butyldiglykol, Diethylenglykoldimethylether, Cyclohexanon, Methylethylketon, Methylisobutylketon, Aceton, Isophoron oder Mischungen davon genannt. Vorzugsweise beträgt der Anteil dieser organischen Lösemittel höchstens 20,0 Gew.-%, besonders bevorzugt höchstens 15,0 Gew.-%, ganz besonders bevorzugt höchstens 10,0 Gew.-%, insbesondere höchstens 5,0 Gew.-% oder höchstens 4,0 Gew.-% oder höchstens 3,0 Gew.-%, noch bevorzugter höchstens 2,5 Gew.-% oder höchstens 2,0 Gew.-% oder höchstens 1,5 Gew.-%, am meisten bevorzugt höchstens 1,0 Gew.-% oder höchstens 0,5 Gew.-%, jeweils bezogen auf den Gesamtanteil der in Beschichtungszusammensetzung (A) enthaltenen flüssigen Verdünnungsmitteln, d.h. flüssigen Lösemitteln und/oder Dispergiermitteln.

Die Anteile in Gew.-% aller in der erfindungsgemäßen Beschichtungszusammensetzung (A) enthaltenen Komponenten, d.h. die Anteile von (A1), (A3), (A4) und Wasser sowie gegebenenfalls (A2) und/oder (A5) und/oder (A6) und/oder (A7) und/oder organischer Lösemittel addieren sich vorzugsweise auf 100 Gew.-%, bezogen auf das Gesamtgewicht der Beschichtungszusammensetzung (A).

Vorzugsweise weist die wässrige Beschichtungszusammensetzung (A) einen Festkörper-Anteil im Bereich von 5 bis 45 Gew.-%, besonders bevorzugt im Bereich von 7,5 bis 35 Gew.-%, ganz besonders bevorzugt von 10 bis 30 Gew.-%, noch bevorzugter im Bereich von 12,5 bis 25 Gew.-% oder im Bereich von 15 bis 30 Gew.-% oder im Bereich von 15 bis 25 Gew-%, insbesondere von 17 bis 22 Gew.-%, jeweils bezogen auf das Gesamtgewicht der wässrigen Beschichtungszusammensetzung (A) auf.

Bestimmungsmethoden zur Bestimmung des Festkörper-Anteils sind dem Fachmann bekannt. Vorzugsweise wird der Festkörper-Anteil gemäß DIN EN ISO 3251 (Datum: 1.6.2008) bestimmt, insbesondere über eine Dauer von 30 Minuten bei 180°C gemäß dieser Norm.

Die erfindungsgemäß eingesetzte wässrige Beschichtungszusammensetzung (A) ist vorzugsweise eine wässrige Dispersion oder Lösung, vorzugsweise eine wässrige Dispersion.

Vorzugsweise weist die erfindungsgemäß eingesetzte Beschichtungszusammensetzung (A) einen pH-Wert im Bereich von 2,0 bis 10,0, besonders bevorzugt von im Bereich von 2,5 bis 8,5 oder im Bereich von 2,5 bis 8,0, ganz besonders bevorzugt von im Bereich von 3,0 bis 7,0 oder im Bereich von 3,0 bis 6,5 oder im Bereich von 3,0 bis 6,0, insbesondere im Bereich von 3,5 bis 6,0 oder im Bereich von 3,5 bis 5,5, insbesondere bevorzugt im Bereich von 3,7 bis 5,5, am meisten bevorzugt im Bereich von 3,9 bis 5,5 oder 4,0 bis 5,5 auf. Methoden zur Einstellung von pH-Werten in wässrigen Zusammensetzungen sind dem Fachmann bekannt. Vorzugsweise erfolgt die Einstellung des erwünschten pH-Werts durch Zugabe wenigstens einer Säure, besonders bevorzugt wenigstens einer anorganischen und/oder wenigstens einer organischen Säure. Geeignete anorganische Säuren sind beispielsweise Salzsäure, Schwefelsäure, Phosphorsäure und/oder Salpetersäure. Eine geeignete organische Säure ist beispielsweise Propionsäure, Milchsäure, Essigsäure und/oder Ameisensäure. Alternativ oder zusätzlich und zudem vorzugsweise kann auch die wenigstens eine in der Beschichtungszusammensetzung (A) vorhandene Komponente (A3) zur Einstellung des pH-Werts eingesetzt werden.

Vorzugsweise wird zur Herstellung der wässrigen Beschichtungs-zusammensetzung (A)
wenigstens eine Komponente (A3) in Form einer wässrigen Lösung mit wenigstens einer trivalentes Bismut (A4) enthaltenen Verbindung umgesetzt und
die so erhaltene wässrige Lösung oder Dispersion oder Suspension, vorzugsweise Lösung, gegebenenfalls nach Filtrieren, des Umsetzungsprodukts aus (A3) und der (A4) enthaltenen Verbindung wenigstens mit der Komponente (A1) und gegebenenfalls (A2) unter Erhalt der wässrigen Beschichtungszusammensetzung (A) vermischt.

### Komponente (A1) und optionale Komponente (A2)

Die erfindungsgemäß eingesetzte wässrige Beschichtungszusammensetzung (A) umfasst wenigstens ein kathodisch abscheidbares Bindemittel als Komponente (A1) und gegebenenfalls wenigstens ein Vernetzungsmittel als Komponente (A2).

Der Begriff "Bindemittel" als Bestandteil der Beschichtungszusammensetzung (A) umfasst im Sinne der vorliegenden Erfindung vorzugsweise die für die Filmbildung verantwortlichen kathodisch abscheidbaren polymeren Harze der erfindungsgemäß eingesetzten wässrigen Beschichtungszusammensetzung (A), wobei jedoch gegebenenfalls vorhandenes Vernetzungsmittel nicht vom Begriff des Bindemittels mit eingeschlossen ist. Vorzugsweise ist ein "Bindemittel" im Sinne der vorliegenden Erfindung daher ein polymeres Harz, wobei jedoch gegebenenfalls vorhandenes Vernetzungsmittel nicht vom Begriff des Bindemittels mit eingeschlossen ist. Insbesondere werden zudem gegebenenfalls vorhandene Pigmente und Füllstoffe nicht unter den Begriff des Bindemittels subsumiert. Vorzugsweise wird zudem als Komponente (A3) vorhandene Polycarbonsäure nicht unter den Begriff des Bindemittels subsumiert.

Vorzugsweise wird zur Herstellung der erfindungsgemäß eingesetzten Beschichtungszusammensetzung (A) eine wässrige Dispersion oder wässrige Lösung, besonders bevorzugt wenigstens eine wässrige Dispersion, eingesetzt, die das wenigstens eine kathodisch abscheidbare Bindemittel (A1) und das gegebenenfalls vorhandene wenigstens eine Vernetzungsmittel (A2) enthält. Diese wässrige Dispersion oder Lösung enthaltend (A1) und gegebenenfalls (A2) weist vorzugsweise einen nicht-flüchtigen Anteil, d.h. einen Festkörper-Anteil, in einem Bereich von 25 bis 60 Gew-%, besonders bevorzugt in einem Bereich von 27,5 bis 55 Gew-%, ganz besonders bevorzugt in einem Bereich von 30 bis 50 Gew-%, noch bevorzugter in einem Bereich von 32,5 bis 45 Gew-%, insbesondere in einem Bereich von 35 bis 42,5 Gew-%, jeweils bezogen auf das Gesamtgewicht dieser wässrigen Dispersion oder Lösung, auf.

Dem Fachmann sind kathodisch abscheidbare Bindemittel (A1) bekannt. Besonders bevorzugt ist das Bindemittel ein kathodisch abscheidbares Bindemittel. Das erfindungsgemäß eingesetzte Bindemittel ist vorzugsweise ein in Wasser lösbares oder dispergierbares Bindemittel.

Alle üblichen dem Fachmann bekannten kathodisch abscheidbaren Bindemittel eignen sich dabei als Bindemittel-Komponente (A1) der erfindungsgemäß eingesetzten wässrigen Beschichtungszusammensetzung (A).

Vorzugsweise weist das Bindemittel (A1) reaktive funktionelle Gruppen auf, die eine Vernetzungsreaktion ermöglichen. Das Bindemittel (A1) ist dabei ein selbstvernetzendes oder ein fremd-vernetzendes Bindemittel, vorzugsweise ein fremdvernetzendes Bindemittel. Um eine Vernetzungsreaktion zu ermöglichen, enthält die Beschichtungszusammensetzung (A) daher neben dem wenigstens einen Bindemittel (A1) vorzugsweise zudem wenigstens ein Vernetzungsmittel (A2).

Das der Beschichtungszusammensetzung (A) enthaltene Bindemittel (A1) bzw. das gegebenenfalls enthaltene Vernetzungsmittel (A2) ist vorzugsweise thermisch vernetzbar. Vorzugsweise sind das Bindemittel (A1) und das gegebenenfalls enthaltene Vernetzungsmittel (A2) beim Erwärmen auf Temperaturen oberhalb Raumtemperatur, d.h. oberhalb von 18-23°C vernetzbar. Vorzugsweise sind das Bindemittel (A1) und das gegebenenfalls enthaltene Vernetzungsmittel (A2) erst bei Ofentemperaturen ≥ 80°C, bevorzugter ≥ 110°C, besonders bevorzugt ≥ 130°C und ganz besonders bevorzugt ≥ 140°C vernetzbar. Besonders vorteilhaft sind das Bindemittel (A1) und das gegebenenfalls enthaltene Vernetzungsmittel (A2) bei 100 bis 250°C, noch bevorzugter bei 125 bis 250°C und besonders bevorzugt bei 150 bis 250°C vernetzbar.

Vorzugsweise umfasst die Beschichtungszusammensetzung (A) wenigstens ein Bindemittel (A1), welches reaktive funktionelle Gruppen aufweist, die vorzugsweise in Kombination mit wenigstens einem Vernetzungsmittel (A2) eine Vernetzungsreaktion ermöglichen.

Jede übliche dem Fachmann bekannte vernetzbare reaktive funktionelle Gruppe kommt dabei in Betracht. Vorzugsweise weist das Bindemittel (A1) reaktive funktionelle Gruppen ausgewählt aus der Gruppe bestehend aus gegebenenfalls substituierten primären Amino-Gruppen, gegebenenfalls substituierten sekundären Amino-Gruppen, substituierten tertiären Amino-Gruppen, Hydroxyl-Gruppen, Thiol-Gruppen, Carboxyl-Gruppen, Gruppen, welche wenigstens eine C=C-Doppelbindung, wie beispielsweise Vinyl-Gruppen oder (Meth)acrylat-Gruppen, und Epoxid-Gruppen auf, wobei die primären und sekundären Amino-Gruppen mit 1 oder 2 oder 3 Substituenten jeweils unabhängig voneinander ausgewählt aus der Gruppe bestehend aus C₁₋₆-aliphatischen Resten wie beispielsweise Methyl, Ethyl, n-Propyl oder iso-Propyl substituiert sein können, wobei diese C₁₋₆-aliphatischen Reste wiederum gegebenenfalls mit 1, 2 oder 3 Substituenten jeweils unabhängig voneinander ausgewählt aus der Gruppe bestehend aus OH, NH₂, NH(C₁₋₆-Alkyl) und N(C₁₋₆-Alkyl)₂ substituiert sein können. Besonders bevorzugt ist wenigstens ein Bindemittel (A1), welches reaktive funktionelle Gruppen ausgewählt aus der Gruppe bestehend aus gegebenenfalls substituierten primären Amino-Gruppen, gegebenenfalls substituierten sekundären Amino-Gruppen, und Hydroxyl-Gruppen aufweist, wobei die primären und sekundären Amino-Gruppen gegebenenfalls mit 1 oder 2 oder 3 Substituenten jeweils unabhängig voneinander ausgewählt aus der Gruppe bestehend aus C₁₋₆-aliphatischen Resten wie beispielsweise Methyl, Ethyl, n-Propyl oder iso-Propyl substituiert sein können, wobei diese C₁₋₆-aliphatischen Reste wiederum gegebenenfalls mit 1, 2 oder 3 Substituenten jeweils unabhängig voneinander ausgewählt aus der Gruppe bestehend aus OH, NH₂, NH(C₁₋₆-Alkyl) und N(C₁₋₆-Alkyl)₂ substituiert sein können. Die reaktiven funktionellen Gruppen, insbesondere die gegebenenfalls substituierten primären und sekundären Amino-Gruppen, können dabei gegebenenfalls zumindest teilweise in protonierter Form vorliegen.

Besonders bevorzugt weist das Bindemittel (A1) tertiäre gegebenenfalls zumindest teilweise in protonierter Form vorliegende Amino-Gruppen auf, ganz besonders bevorzugt solche tertiären Amino-Gruppen, die jeweils unabhängig voneinander wenigstens zwei jeweils wenigstens einfach mit einer Hydroxyl-Gruppe substituierte C₁₋₃-Alkyl-Gruppen aufweisen, insbesondere die jeweils unabhängig voneinander zwei Hydroxyethyl-Gruppen, zwei Hydroxypropyl-Gruppen oder eine Hydroxylpropyl- und eine Hydroxyethyl-Gruppe aufweisen, wobei das Bindemittel (A1) vorzugsweise wenigstens ein polymeres Harz ist. Derartige Bindemittel können beispielsweise nach einem Verfahren erhalten werden, welches in JP 2011-057944 A beschrieben ist.

Vorzugsweise ist das in der Beschichtungszusammensetzung (A) enthaltene Bindemittel (A1) wenigstens ein Acrylat-basiertes polymeres Harz und/oder wenigstens ein Epoxid-basiertes polymeres Harz, insbesondere wenigstens ein kationisches Epoxid-basiertes und Amin-modifiziertes Harz. Die Herstellung solcher kationischer Amin-modifizierter Epoxid-basierter Harze ist bekannt und wird beispielsweise in DE 35 18 732, DE 35 18 770, EP 0 004 090, EP 0 012 463, EP 0 961 797 B1 und EP 0 505 445 B1 beschrieben. Unter kationischen Epoxid-basierten Amin-modifizierten Harzen werden vorzugsweise Reaktionsprodukte aus wenigstens einem gegebenenfalls modifizierten Polyepoxid, d.h. wenigstens einer gegebenenfalls modifizierten Verbindung mit zwei oder mehr Epoxid-Gruppen, und wenigstens einem vorzugsweise wasserlöslichen Amin, vorzugsweise wenigstens einem solchen primären und/oder sekundären Amin verstanden. Besonders bevorzugte Polyepoxide sind dabei aus Polyphenolen und Epihalohydrinen hergestellte Polyglycidylether von Polyphenolen. Als Polyphenole können insbesondere Bisphenol A und/oder Bisphenol F eingesetzt werden. Weitere geeignete Polyepoxide sind Polyglycidylether von mehrwertigen Alkoholen, wie z. B. Ethylenglykol, Diethylenglykol, Triethylenglykol, 1,2-Propylenglykol- 1-4-Propylenglykol, 1,5-Pentandiol, 1,2,6-Hexantriol, Glycerin und Bis-(4-hydroxycyclohexyl)2,2propan. Unter modifizierten Polyepoxiden werden solche Polyepoxide verstanden, in denen ein Teil der reaktiven funktionellen Gruppen mit wenigstens einer modifizierenden Verbindung umgesetzt worden ist. Beispiele für solche modifizierenden Verbindungen sind:
a) Carboxylgruppenhaltige Verbindungen, wie gesättigte oder ungesättigte Monocarbonsäuren (z.B. Benzoesäure, Leinölfettsäure, 2-Ethylhexansäure, Versaticsäure), aliphatische, cycloaliphatische und/oder aromatische Dicarbonsäuren verschiedener Kettenlänge (z. B. Adipinsäure, Sebacinsäure, Isophthalsäure oder dimere Fettsäuren), Hydroxialkylcarbonsäuren (z.B. Milchsäure, Dimethylolpropionsäure) sowie carboxylgruppenhaltige Polyester oder
b) aminogruppenhaltige Verbindungen, wie Diethylamin oder Ethylhexylamin oder Diamine mit sekundären Aminogruppen, z. B. N,N'-Dialkylalykendiamine, wie Dimethylethylendiamin, N,N'-Dialkyl-polyoxialkylenamine, wie N,N'-dimethylpolyoxipropylendiamin, cyanalkylierte Alkylendiamine, wie Bis-N,N'-Cyanethyl-ethylendiamin, cyanalkylierte Polyoxialkylenamine, wie Bis-N,N'-Cyanethylpolyoxipropylendiamin, Polyaminoamide, wie z. B. Versamide, insbesondere endständige Aminogruppen enthaltende Umsetzungsprodukte aus Diaminen (z.B. Hexamethylendiamin), Polycarbonsäuren, insbesondere Dimerfettsäuren und Monocarbonsäuren, insbesondere Fettsäuren, oder das Umsetzungsprodukt von einem Mol Diaminohexan mit zwei Molen Monoglycidylether oder Monoglycidylester, speziell Glycidylester α-verzweigter Fettsäuren, wie der Versaticsäure, oder
c) hydroxylgruppenhaltige Verbindungen, wie Neopentylglykol, Bis-ethoxiliertes Neopentylglykol, Hydroxipivalinsäureneopentylglykolester, Dimethylhydantoin-N-N'-diethanol, Hexandiol-1,6, Hexandiol-2,5, 1,4-Bis- (hydroximethyl)cyclohexan, 1,1-Isopropyliden-bis-(p-phenoxy)-2-propanol, Trimethylolpropan, Pentaerythrit oder Aminoalkohole, wie Triethanolamin, Methyldiethanolamin oder hydroxylgruppenhaltige Alkylketimine, wie Aminomethylpropandiol-1,3-methyl-isobutylketimin oder Tris-(hydroximethyl)-aminomethan-cyclohexanonketimin sowie auch Polyglykolether, Polyesterpolyole, Polyetherpolyole, Polycaprolactonpolyole, Polycaprolactampolyole verschiedener Funktionalität und Molekulargewichte oder
d) gesättigte oder ungesättigte Fettsäuremethylester, die in Gegenwart von Natriummethylat mit Hydroxylgruppen der Epoxidharze umgeestert werden.
Beispiele für einsetzbare Amine sind Mono- und Dialkylamine, wie Methylamin, Ethylamin, Propylamin, Butylamin, Dimethylamin, Diethylamin, Dipropylamin, Methylbutylamin, Alkanolamine, wie z. B. Methylethanolamin oder Diethanolamin, Dialkylaminoalkylamine, wie z. B. Dimethylaminoethylamin, Diethylaminopropylamin, oder Dimethylaminopropylamin. Die einsetzbaren Amine können auch noch andere funktionelle Gruppen enthalten, sofern diese die Umsetzung des Amins mit der Epoxidgruppe des gegebenenfalls modifizierten Polyepoxids nicht stören und auch nicht zu einer Gelierung der Reaktionsmischung führen. Bevorzugt werden sekundäre Amine eingesetzt. Die für die Wasserverdünnbarkeit und elektrische Abscheidung erforderlichen Ladungen können durch Protonierung mit wasserlöslichen Säuren (z.B. Borsäure, Ameisensäure, Essigsäure, Milchsäure, bevorzugt Essigsäure) erzeugt werden. Eine weitere Möglichkeit zur Einführung kationischer Gruppen in die das gegebenenfalls modifizierte Polyepoxid besteht in der Umsetzung von Epoxidgruppen des Polyepoxids mit Amin-Salzen.

Vorzugsweise umfasst die Beschichtungszusammensetzung (A) neben dem wenigstens einen kathodisch abscheidbaren Bindemittel (A1) wenigstens ein Vernetzungsmittel (A2), welches eine Vernetzungsreaktion mit den reaktiven funktionellen Gruppen des Bindemittels (A1) ermöglicht.

Alle dem Fachmann bekannten üblichen Vernetzungsmittel (A2) können eingesetzt werden wie beispielsweise Phenoplaste, polyfunktionelle Mannich-Basen, Melaminharze, Benzoguanamin-Harze, Epoxide, freie Polyisocyanate und/oder blockierte Polyisocyanate, insbesondere blockierte Polyisocyanate.

Ein besonders bevorzugtes Vernetzungsmittel (A2) ist ein blockiertes Polyisocyanat. Als blockierte Polyisocyanate können beliebige Polyisocyanate wie beispielsweise Diisocyanate benutzt werden, bei denen die Isocyanat-Gruppen mit einer Verbindung umgesetzt worden sind, so dass das gebildete blockierte Polyisocyanat insbesondere gegenüber Hydroxyl- und Amino-Gruppen wie primärer und/oder sekundärer Amino-Gruppen bei Raumtemperatur, d.h. bei einer Temperatur von 18 bis 23°C beständig ist, bei erhöhten Temperaturen, beispielsweise brei ≥ 80°C, bevorzugter ≥ 110°C, besonders bevorzugt ≥ 130°C und ganz besonders bevorzugt ≥ 140°C oder bei 90°C bis 300°C oder bei 100 bis 250°C, noch bevorzugter bei 125 bis 250°C und besonders bevorzugt bei 150 bis 250°, aber reagiert.

Bei der Herstellung der blockierten Polyisocyanate können beliebige für die Vernetzung geeignete organische Polyisocyanate verwendet werden. Als Isocyanate werden bevorzugt (hetero)aliphatische, (hetero)cycloaliphatische, (hetero)aromatische oder (hetero)aliphatisch-(hetero)aromatische Isocyanate eingesetzt. Bevorzugt sind Diisocyanate, die 2 bis 36, insbesondere 6 bis 15 Kohlenstoffatome enthalten. Bevorzugte Beispiele sind 1,2-Ethylendiisocyanat, 1,4-Tetramethylendiisocyanat, 1,6-Hexamethylendiisocyanat (HDI), 2,2,4-(2,4,4)-Trimethyl-1,6-hexamethylendiisocyanat (TMDI), Diphenylmethandiisocyanat (MDI), 1,9-Diisocyanato-5-methylnonan, 1,8-Diisocyanato-2,4-dimethyloctan, 1,12-Dodecandiisocyanat, ω,ω'-Diisocyanatodipropylether, Cyclobuten-1,3-diisocyanat, Cyclohexan-1,3- und -1,4-diisocyanat, 3-Isocyanato-methyl-3,5,5-trimethyl-cyclohexylisocyanat (Isophorondiisocyanat, IPDI), 1,4-Diisocyanatomethyl-2,3,5,6-tetramethyl-cyclohexan, Decahydro-8-methyl-(1,4-methanol-naphthalen-2 (oder 3), 5-ylendimethylendiisocyanat, Hexahydro-4,7-methano-indan-1 (oder 2), 5 (oder 6) ylendimethylendiisocyanat, Hexahydro-4,7-methanoindan-1 (oder 2), 5 (oder 6) ylendiisocyanat, 2,4- und/oder 2,6-Hexahydrotoluylendiisocyanat (H6-TDI), 2,4- und/oder 2,6-Toluoldiisocyanat (TDI), Perhydro-2,4'-diphenylmethandiisocyanat, Perhydro-4,4'-diphenylmethandiisocyanat (H₁₂MDI), 4,4'-Diisocyanato-3,3',5,5'-tetramethyldicyclohexylmethan, 4,4'-Diisocyanato-2,2',3,3',5,5',6,6'-octamethyldicyclohexylmethan, ω,ω'-Diisocyanato-1,4-diethylbenzen, 1,4-Diisocyanatomethyl-2,3,5,6-tetramethylbenzen, 2-Methyl-1,5-diisocyanatopentan (MPDI), 2-Ethyl-1,4-diisocyanatobutan, 1,10-Diisocyanatodecan, 1,5-Diisocyanatohexan, 1,3-Diisocyanatomethylcyclohexan, 1,4-Diisocyanatomethylcyclohexan, 2,5(2,6)-Bis(isocyanatomethyl)bicyclo[2.2.1]heptan (NBDI), sowie jede Mischung dieser Verbindungen. Es können auch Polyisocyanate von höherer Isocyanatfunktionalität verwendet werden. Beispiele dafür sind trimerisiertes Hexamethylendiisocyanat und trimerisiertes Isophorondiisocyanat. Ferner kann man auch Mischungen von Polyisocyanaten benutzen. Die bei der Erfindung als Vernetzungsmittel (A2) in Betracht kommenden organischen Polyisocyanate können auch Präpolymere sein, die sich beispielsweise von einem Polyol einschliesslich eines Polyetherpolyols oder eines Polyesterpolyols ableiten. Ganz besonders bevorzugt sind 4-Toluoldiisocyanat und/oder 2,6-Toluoldiisocyanat (TDI), bzw. Isomerengemische aus 2,4-Toluoldiisocyanat und 2,6-Toluoldiisocyanat und/oder Diphenylmethandiisocyanat (MDI).

Für die Blockierung der Polyisocyanate können vorzugsweise beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl, Octyl-, Nonyl-, 3,3,5-Trimethylhexyl-, Decyl- und Laurylalkohol; cycloaliphatische Alkohole, wie Cyclopentanol und Cyclohexanol; aromatische Alkylalkohole, wie Phenylcarbinol und Methylphenylcarbinol. Andere geeignete Blockierungsmittel sind Hydroxylamine, wie Ethanolamin, Oxime, wie Methylethylketonoxim, Acetonoxim und Cyclohexanonoxim und Amine, wie Dibutylamin und Diisopropylamin.

Vorzugsweise liegt das relative Gewichtsverhältnis des wenigstens einen Bindemittels (A1) und des gegebenenfalls vorhandenen wenigstens einen Vernetzungsmittels (A2) in der erfindungsgemäß eingesetzten Beschichtungszusammensetzung (A) zueinander in einem Bereich von 4:1 bis 1,1:1, besonders bevorzugt in einem Bereich von 3:1 bis 1,1:1, ganz besonders bevorzugt in einem Bereich von 2,5:1 bis 1,1:1, insbesondere in einem Bereich von 2,1:1 bis 1,1:1, jeweils bezogen auf den Festkörper-Anteil des wenigstens einen Bindemittels (A1) und des wenigstens einen Vernetzungsmittel (A2) in der Beschichtungszusammensetzung (A).

In einer anderen bevorzugten Ausführungsform liegt das relative Gewichtsverhältnis des wenigstens einen Bindemittels (A1) und des gegebenenfalls vorhandenen wenigstens einen Vernetzungsmittels (A2) in der erfindungsgemäß eingesetzten Beschichtungszusammensetzung (A) zueinander in einem Bereich von 4:1 bis 1,5:1, besonders bevorzugt in einem Bereich von 3:1 bis 1,5:1, ganz besonders bevorzugt in einem Bereich von 2,5:1 bis 1,5:1, insbesondere in einem Bereich von 2,1:1 bis 1,5:1, jeweils bezogen auf den Festkörper-Anteil des wenigstens einen Bindemittels (A1) und des wenigstens einen Vernetzungsmittel (A2) in der Beschichtungszusammensetzung (A).

### Komponente (A3)

Die erfindungsgemäß eingesetzte wässrige Beschichtungszusammensetzung (A) umfasst wenigstens eine organische Mono- oder Polycarbonsäure, welche kein(e) Stickstoffatom(e) aufweist, und/oder deren Anionen als Komponente (A3) und trivalentes Bismut als Komponente (A4), wobei die wenigstens eine organische Mono- oder Polycarbonsäure (A3) und/oder deren Anionen und das trivalente Bismut als Komponente (A4) vorzugsweise jeweils in einer solchen Menge in der wässrigen Beschichtungszusammensetzung (A) vorhanden sind, dass deren Stöchiometrie zueinander es erlaubt, dass wenigstens 50 mol-% des trivalenten Bismuts in Form eines Salzes und/oder Komplexes, vorzugsweise eines Salzes, aus den Komponenten (A3) und (A4) vorliegt.

Vorzugsweise ist die wenigstens eine organische Mono- oder Polycarbonsäure und/oder deren Anionen daher zur Ausbildung von Salzen und/oder Komplexen mit dem in der wässrigen Beschichtungszusammensetzung (A) enthaltenen trivalenten Bismut geeignet. Unter dem Begriff "Salz" wird dabei vorzugsweise eine chemische Verbindung verstanden, die aus positiv geladenen Bismut-Kationen und negativ geladenen Anionen aufgebaut ist. Unter dem Begriff "Komplex" wird dabei vorzugsweise ein chemischer Komplex verstanden, der wenigstens ein vorzugsweise geladenes Bismutatom aufweist, welches von wenigstens einem Liganden komplexiert wird. Das wenigstens eine Bismutatom ist dabei vorzugsweise ein Zentralatom des Komplexes. Als Ligand liegt vorzugsweise wenigstens ein Molekül der organischen Mono- oder Polycarbonsäure und/oder deren Anionen (A4) vor. Beispiele solcher Komplexe sind Chelat-Komplexe.

Vorzugsweise enthält die erfindungsgemäß eingesetzte Beschichtungszusammensetzung (A) ein vorzugsweise wasserlösliches Reaktionsprodukt aus (A3) und (A4). Als "wasserlöslich" wird diesbezüglich vorzugsweise ein Reaktionsprodukt verstanden, dessen Löslichkeit in Wasser bei einer Temperatur von 25 °C mindestens 1 g pro 100 mL Wasser beträgt. Vorzugsweise beträgt die Wasserlöslichkeit des Reaktionsprodukts aus (A3) und (A4) mehr als 5 g pro 100 mL, besonders bevorzugt mehr als 10 g pro 100 mL Wasser.

Unter dem Begriff "Polycarbonsäure" wird im Sinne der vorliegenden Erfindung vorzugsweise eine Carbonsäure verstanden, welche zwei oder mehrere Carboxyl-Gruppen, beispielsweise 2, 3, 4, 5 oder 6 Carboxyl-Gruppen aufweist. Besonders bevorzugt weist die Polycarbonsäure 2 oder 3 Carboxyl-Gruppen auf. Bei Polycarbonsäuren mit zwei Carboxyl-Gruppen handelt es sich um Dicarbonsäuren und bei Polycarbonsäuren mit drei Carboxyl-Gruppen handelt es sich um Tricarbonsäuren. Die erfindungsgemäß eingesetzten Polycarbonsäuren können aromatisch, teilaromatisch, cycloaliphatisch, teilcycloaliphatisch oder aliphatisch sein, vorzugsweise aliphatisch sein. Vorzugsweise weisen die erfindungsgemäß eingesetzten Polycarbonsäuren 2 bis 64 Kohlenstoffatome, besonders bevorzugt 2 bis 36, insbesondere 3 bis 18 oder 3 bis 8 Kohlenstoffatome auf.

Unter dem Begriff "Monocarbonsäure" wird im Sinne der vorliegenden Erfindung vorzugsweise eine vorzugsweise aliphatische Monocarbonsäure verstanden, die genau eine -C(=O)-OH-Gruppe aufweist. Vorzugsweise weisen die erfindungsgemäß eingesetzten Monocarbonsäuren 1 bis 64 Kohlenstoffatome, besonders bevorzugt 1 bis 36, insbesondere 2 bis 18 oder 3 bis 8 Kohlenstoffatome auf.

Vorzugsweise sind die wenigstens eine organische Mono- oder Polycarbonsäure (A3) und/oder deren Anionen und das trivalente Bismut als Komponente (A4) jeweils in einer solchen Menge in der wässrigen Beschichtungszusammensetzung (A) vorhanden, dass deren Stöchiometrie zueinander es erlaubt, dass wenigstens 75 mol-%, besonders bevorzugt wenigstens 80 mol-% oder wenigstens 90 mol-% oder wenigstens 95 mol-% oder 100 mol-% des trivalenten Bismuts in Form eines Salzes und/oder Komplexes aus den Komponenten (A3) und (A4) vorliegt.

Vorzugsweise weist die wenigstens eine organische Mono- oder Polycarbonsäure und/oder deren Anionen (A3) wenigstens eine Carboxyl-Gruppe bzw. Carboxylat-Gruppe auf, die an einen organischen Rest mit 1-8 Kohlenstoffatomen gebunden ist, wobei der organische Rest gegebenenfalls mit wenigstens einem, vorzugsweise wenigstens einem oder wenigstens zwei, Substituenten ausgewählt aus der Gruppe bestehend aus Hydroxyl-Gruppen, Ester-Gruppen und Ether-Gruppen substituiert sein kann.

Vorzugsweise ist die Komponente (A3) ausgewählt aus der Gruppe bestehend aus Mono- und Polycarbonsäuren und/oder deren Anionen, die in α-, β- oder γ-Stellung zur wenigstens einen Carboxyl-Gruppe bzw. Carboxylat-Gruppe eine oder zwei alkoholische Hydroxylgruppe(n) oder Estergruppe(n) oder Ethergruppe(n) aufweisen. Beispiele derartiger Säuren sind: Glykolsäure (Hydroxyessigsäure), Milchsäure, γ-Hydroxypropionsäure, α-Methylolpropionsäure, α,α'-Dimethylol-propionsäure, Weinsäure, Hydroxyphenylessigsäure, Äpfelsäure, Citronensäure und Zuckersäuren wie beispielsweise Gluconsäure und Schleimsäure. Zyklische oder aromatische Carbonsäuren sind ebenfalls geeignet, wenn die Hydroxyl-, Ester- oder Ethergruppen so zur Carboxylgruppe angeordnet sind, dass eine Bildung von Komplexen möglich wird. Beispiele hierfür sind Salicylsäure, Gallussäure und 2,4-Dihydroxybenzoesäure. Beispiele geeigneter Carbonsäuren mit einer Ethergruppe oder Estergruppe sind Methoxyessigsäure, Methoxyessigsäuremethylester, Methoxyessigsäureisopropylester, Dimethoxyessigsäure, Ethoxyessigsäure, Propoxyessigsäure, Butoxyessigsäure, 2-Ethoxy-2-Methylpropansäure, 3-Ethoxypropansäure, Butoxypropansäure und deren Ester, Butoxybuttersäure und α- oder β-Methoxypropionsäure. Optisch aktive Carbonsäuren wie Milchsäure können in der L-Form, in der D-Form oder als Racemat eingesetzt werden. Vorzugsweise werden Milchsäure (in optisch aktiver Form, bevorzugt als L-Form, oder als Racemat) und/oder Dimethylolpropionsäure verwendet.

Vorzugsweise beträgt das Äquivalenzverhältnis der wenigstens einen organischen Mono- oder Polycarbonsäure und/oder deren Anionen (A3) zu dem in der wässrigen Beschichtungszusammensetzung (A) enthaltenen trivalenten Bismut (A4) wenigstens 0,5, besonders bevorzugt wenigstens 0,75. Das Äquivalenzverhältnis bezieht sich dabei auf den Quotienten aus der Anzahl der Carboxyl-Gruppen der wenigstens einen organischen Mono- oder Polycarbonsäure und/oder deren Anionen (A3) in Mol und der in (A) enthaltenen Menge an trivalentem Bismut (A4) in Mol. Liegen beispielsweise zum vollständigen Ladungsausgleich von einem Mol trivalentem Bismut drei Mol Anionen einbasischer Monocarbonsäuren (A3) vor, so dass formal ein neutrales Salz entsteht, beträgt das Äquivalenzverhältnis 1. Dies ist auch der Fall, wenn statt drei Mol Anionen einbasischer Monocarbonsäuren ein Mol einer Tricarbonsäure vorhanden ist.

Die Komponente (A3) fungiert vorzugsweise als Komplexbildner gegenüber dem in (A) enthaltenen trivalenten Bismut. Vorzugsweise weist (A) einen Überschuss der Komponente (A3) über ein Äquivalenzverhältnis von eins hinaus auf, wie beispielsweise ein Äquivalenzverhältnis von 1,1 oder 1,2 oder 1,5 oder 2.

Als Komponente (A3) sind insbesondere solche Mono- oder Polycarbonsäuren und/oder deren Anionen geeignet, welche in der Lage sind, in Wasser die Komponente (A4), insbesondere die unter Verwendung von Bismut(III)-oxid hergestellte Komponente (A4), bei Temperaturen im Bereich von 10 bis 90 °C oder im Bereich von 20 bis 80 °C, besonders bevorzugt im Bereich von 30 bis 75 °C, in eine zumindest teilweise, vorzugsweise vollständige, wasserlösliche Form zu überführen.

### Komponente (A4)

Die erfindungsgemäß eingesetzte wässrige Beschichtungszusammensetzung (A) umfasst wenigstens eine organische Mono- oder Polycarbonsäure, welche kein(e) Stickstoffatom(e) aufweist, und/oder deren Anionen als Komponente (A3) und trivalentes Bismut, d.h. Bi(III), als Komponente (A4), wobei die wenigstens eine organische Mono- oder Polycarbonsäure (A3) und/oder deren Anionen und das trivalente Bismut als Komponente (A4) jeweils in einer solchen Menge in der wässrigen Beschichtungszusammensetzung (A) vorhanden sind, dass deren Stöchiometrie zueinander es erlaubt, dass wenigstens 50 mol-% des trivalenten Bismuts in Form eines Salzes und/oder Komplexes, vorzugsweise eines Salzes, aus den Komponenten (A3) und (A4) vorliegt.

Vorzugsweise enthält die Beschichtungszusammensetzung (A) die Komponente (A4) in einer solchen Menge, dass der Gehalt an trivalentem Bismut, berechnet als Bismut-Metall, bezogen auf das Gesamtgewicht der wässrigen Beschichtungszusammensetzung (A) in einem Bereich von 10 ppm bis 20 000 ppm, besonders bevorzugt in einem Bereich von 50 ppm bis 15 000 ppm, ganz besonders bevorzugt in einem Bereich von 100 ppm bis 10 000 ppm, insbesondere bevorzugt in einem Bereich von 500 ppm bis 10 000 ppm oder in einem Bereich von 1 000 ppm bis 10 000 ppm oder in einem Bereich von 1 000 ppm bis 5 000 ppm oder in einem Bereich von 500 ppm bis 3 000 ppm, liegt. Die Menge an Bismut, berechnet als Metall, kann mittels der nachstehenden Methode (ICP-OES) bestimmt werden.

Dem Fachmann ist bekannt, dass trivalentes Bismut als Komponente (A4) solches Bismut bezeichnet, welches eine Wertigkeit von +3 aufweist bzw. in der Oxidationsstufe (III) vorliegt, d.h. Bi(III). Dabei liegt Bi(III) in der Beschichtungszusammensetzung (A) vorzugsweise in Form einer Bi(III)-haltigen Verbindung vor, beispielsweise in Form eines Salzes und/oder Komplexes der Komponente (A3) mit Bi(III) als Komponente (A4).

Vorzugsweise wird zur Herstellung der Komponente (A4) eine Bismut(III)-haltige Verbindung eingesetzt, die zumindest partiell, besonders bevorzugt vollständig, wasserunlöslich ist. Geeignete zur Herstellung der Komponente (A4) Bismut(III)-haltige Verbindungen sind beispielsweise Bismut(III)-oxid, basisches Bismut(III)-oxid, Bismut(III)-Hydroxid, Bismut(III)-Carbonat, Bismut(III)-Nitrat, Bismut(III)-Subnitrat (basisches Bismut(III)-Nitrat), Bismut(III)-Salicylat und/oder Bismut(III)-Subsalicylat (basisches Bismut(III)-Salicylat).

Besonders bevorzugt wird zur Herstellung der Komponente (A4) Bismut(III)-oxid eingesetzt.

Vorzugsweise wird zur Herstellung der wässrigen Beschichtungszusammensetzung (A)
wenigstens eine Komponente (A3) in Form einer wässrigen Lösung mit wenigstens einer trivalentes Bismut (A4) enthaltenen Verbindung unter Erhalt einer wässrigen Lösung oder Dispersion oder Suspension, vorzugsweise Lösung, gegebenenfalls nach Filtrieren, des Umsetzungsprodukts aus (A3) und der (A4) enthaltenen Verbindung, umgesetzt und dieses vorzugsweise wasserlösliches Umsetzungsprodukt zur Herstellung der erfindungsgemäß eingesetzten Beschichtungszusammensetzung (A) eingesetzt.

Besonders bevorzugt wird zur Herstellung der wässrigen Beschichtungszusammensetzung (A) wenigstens eine Komponente (A3) ausgewählt aus der Gruppe bestehend aus Milchsäure und Dimethylpropionsäure in Form einer wässrigen Lösung mit wenigstens einer trivalentes Bismut (A4) enthaltenen Verbindung, vorzugsweise mit Bismut(III)-oxid, unter Erhalt einer wässrigen Lösung oder Dispersion oder Suspension, vorzugsweise Lösung, gegebenenfalls nach Filtrieren, des Umsetzungsprodukts aus (A3) und der (A4) enthaltenen Verbindung umgesetzt und dieses vorzugsweise wasserlösliche Umsetzungsprodukt zur Herstellung der erfindungsgemäß eingesetzten Beschichtungszusammensetzung (A) eingesetzt.

### Weitere optionale Komponenten der Beschichtungszusammensetzung (A)

Die erfindungsgemäß eingesetzte wässrige Beschichtungszusammensetzung (A) kann zudem je nach erwünschter Anwendung wenigstens ein Pigment (A5) enthalten.

Vorzugsweise ist ein solches in der wässrigen Beschichtungszusammensetzung (A) enthaltenes Pigment (A5) ausgewählt aus der Gruppe bestehend aus organischen und anorganischen, farbgebenden und füllenden Pigmenten.

Das wenigstens eine Pigment (A5) kann dabei als Bestandteil der zur Herstellung der Beschichtungszusammensetzung (A) eingesetzten wässrigen Lösung oder Dispersion vorliegen, welche die Komponenten (A1) und gegebenenfalls (A2) enthält.

Alternativ kann das wenigstens eine Pigment (A5) auch in Form einer weiteren von dieser eingesetzten verschiedenen wässrigen Dispersion oder Lösung in die Beschichtungszusammensetzung (A) eingearbeitet werden. Innerhalb dieser Ausführungsform kann die entsprechende Pigment-haltige wässrige Dispersion oder Lösung zudem wenigstens ein Bindemittel enthalten.

Beispiele für geeignete anorganische farbgebende Pigmente (A5) sind Weißpigmente wie Zinkoxid, Zinksulfid, Titandioxid, Antimonoxid oder Lithopone; Schwarzpigmente wie Ruß, Eisen-Mangan-Schwarz oder Spinellschwarz; Buntpigmente wie Kobaltgrün oder Ultramaringrün, Kobaltblau, Ultramarinblau oder Manganblau, Ultramarinviolett oder Kobalt- und Manganviolett, Eisenoxidrot, Molybdatrot oder Ultramarinrot; Eisenoxidbraun, Mischbraun, Spinell- und Korundphasen; oder Eisenoxidgelb, Nickeltitangelb, oder Bismutvanadat. Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz. Beispiele geeigneter füllender Pigmente oder Füllstoffe sind Kreide, Calciumsulfat, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern oder Polymerpulver; ergänzend wird auf Römpp Lexikon Lacke und Druckfarben, Georg Thieme Verlag, 1998, Seiten 250 ff., «Füllstoffe», verwiesen.

Der Pigment-Gehalt in den wässrigen Beschichtungszusammensetzungen (A) kann je nach Verwendungszweck und nach der Natur der Pigmente (A5) variieren. Vorzugsweise liegt der Gehalt, jeweils bezogen auf das Gesamtgewicht der wässrigen Beschichtungszusammensetzung (A) im Bereich von 0,1 bis 30 Gew.-% oder im Bereich von 0,5 bis 20 Gew.-%, besonders bevorzugt im Bereich von 1,0 bis 15 Gew.-%, ganz besonders bevorzugt im Bereich von 1,5 bis 10 Gew.-% und insbesondere im Bereich von 2,0 bis 5,0 Gew.-% oder im Bereich von 2,0 bis 4,0 Gew.-% oder im Bereich von 2,0 bis 3,5 Gew.-%.

Die Beschichtungszusammensetzung (A) kann je nach erwünschter Anwendung ein oder mehrere üblicherweise eingesetzte Additive (A6) enthalten. Vorzugsweise sind diese Additive (A6) ausgewählt aus der Gruppe bestehend aus Benetzungsmitteln, Emulgatoren, welche vorzugsweise die Komponente (A7) nicht beinhalten, Dispergiermitteln, oberflächen-aktiven Verbindungen wie Tensiden, Verlaufshilfsmitteln, Löslichkeitsvermittlern, Entschäumungsmitteln, Rheologiehilfsmitteln, Antioxidantien, Stabilisierungsmitteln, vorzugsweise HitzeStabilisatoren, Prozess-Stabilisatoren und UV- und/oder Licht-Stabilisatoren, Katalysatoren, Füllstoffen, Wachsen, Flexibilisierungsmitten, Weichmachern und Gemischen aus den vorstehend genannten Additiven. Der Additiv-Gehalt kann je nach Verwendungszweck sehr breit variieren. Vorzugsweise liegt der Gehalt, bezogen auf das Gesamtgewicht der wässrigen Beschichtungszusammensetzung (A), bei 0,1 bis 20,0 Gew.-%, bevorzugt bei 0,1 bis 15,0 Gew.-%, besonders bevorzugt bei 0,1 bis 10,0 Gew.-%, ganz besonders bevorzugt bei 0,1 bis 5,0 Gew.-% und insbesondere bei 0,1 bis 2,5 Gew.-%.

Das wenigstens eine Additiv (A6) kann dabei als Bestandteil der zur Herstellung der Beschichtungszusammensetzung (A) eingesetzten wässrigen Lösung oder Dispersion vorliegen, welche die Komponenten (A1) und gegebenenfalls (A2) enthält.

Alternativ kann das wenigstens eine Additiv (A6) auch in Form einer weiteren von dieser eingesetzten verschiedenen wässrigen Dispersion oder Lösung in die Beschichtungszusammensetzung (A) eingearbeitet werden, beispielsweise innerhalb einer wässrigen Dispersion oder Lösung, die wenigstens ein Pigment (A5) und gegebenenfalls zudem wenigstens ein Bindemittel enthält oder in eine wässrige Lösung, die ein Umsetzungsprodukt aus (A3) und einer (A4) enthaltenen Verbindung enthält.

In einer bevorzugten Ausführungsform ist die erfindungsgemäß eingesetzte Beschichtungszusammensetzung (A) eine kathodisch abscheidbare Miniemulsion, welche wenigstens einen kationischen Emulgator (A7) umfasst. Der Begriff "Miniemulsion" ist dem Fachmann bekannt, beispielsweise aus I.M. Grabs et al., Macromol. Symp. 2009, 275-276, Seiten 133-141. Eine Miniemulsion ist demnach eine Emulsion, deren Teilchen eine mittlere Teilchengröße im Bereich von 5 bis 500 nm aufweisen. Methoden zur Bestimmung der mittleren Teilchengröße solcher Teilchen sind dem Fachmann bekannt. Vorzugsweise erfolgt eine solche Bestimmung der mittleren Teilchengröße mittels dynamischer Lichtstreuung gemäß DIN ISO 13321 (Datum: 1.10.2004). Derartige Miniemulsionen sind beispielsweise aus WO 82/00148 A1 bekannt. Bei dem wenigstens einen kationischen Emulgator handelt es sich vorzugsweis um einen Emulgator, welcher einen HLB-Wert von ≥ 8 aufweist, welcher vorzugsweise gemäß der dem Fachmann bekannten Methode von Griffin bestimmt wird. Der Emulgator kann reaktive funktionelle Gruppen aufweisen. Als solche reaktiven funktionellen Gruppen kommen die gleichen reaktiven funktionellen Gruppen in Betracht, die auch das Bindemittel (A1) aufweisen kann. Vorzugsweise weist der Emulgator eine hydrophile Kopfgruppe auf, welche vorzugsweise ein quaternäres Stickstoffatom aufweist, an das vier organische vorzugsweise aliphatische Reste wie beispielsweise organische Reste mit 1-10 Kohlenstoffatomen gebunden sind, und eine lipophile Schwanzgruppe. Wenigstens einer dieser organischen Reste weist dabei vorzugsweise eine Hydroxyl-Gruppe auf.

### Optionale in (A) enthaltene weitere Metall-Ionen und Aminopolycarbonsäuren

Der molare Anteil von gegebenenfalls in der wässrigen Beschichtungszusammensetzung (A) enthaltenen Zirkonium-Ionen ist wenigstens um den Faktor 100, vorzugsweise wenigstens um den Faktor 200, ganz besonders bevorzugt wenigstens um den Faktor 300 oder 400 oder 500 oder 600 oder 700 oder 800 oder 900 oder 1 000 geringer als der molare Anteil des in der wässrigen Beschichtungszusammensetzung (A) enthaltenen trivalenten Bismuts, vorzugsweise jeweils bezogen auf das Gesamtgewicht der wässrigen Zusammensetzung (A). Die Beschichtungszusammensetzung (A) enthält insbesondere bevorzugt keine Zirkonium-Ionen.

Üblicherweise in Beschichtungszusammensetzungen zur Verbesserung des Korrosionsschutzes eingesetzte Zirkonium-Verbindungen werden oftmals in Form von Salzen oder Säuren eingesetzt, die Zirkonium-Ionen, insbesondere [ZrF_{6]}²⁻-Ionen enthalten. Der Einsatz solcher [ZrF_{6]}²⁻-Ionen führt bei gleichzeitiger Anwesenheit von Bismut-Ionen jedoch zur Ausfällung von Bismutfluorid. Daher soll der Einsatz von Zirkonium-Verbindungen in der Beschichtungszusammensetzung (A) vermieden werden.

Vorzugsweise ist zudem der molare Anteil von gegebenenfalls in der wässrigen Beschichtungszusammensetzung (A) enthaltenen Ionen ausgewählt aus der Gruppe bestehend aus Ionen von Metallen der Seltenen Erden wenigstens um den Faktor 100, ganz besonders bevorzugt wenigstens um den Faktor 200 oder 300 oder 400 oder 500 oder 600 oder 700 oder 800 oder 900 oder 1 000 geringer als der molare Anteil des in der wässrigen Beschichtungszusammensetzung (A) enthaltenen trivalenten Bismuts, vorzugsweise jeweils bezogen auf das Gesamtgewicht der wässrigen Zusammensetzung (A). Insbesondere enthält die Beschichtungszusammensetzung (A) keine Ionen von Metallen der Seltenen Erden.

Die Anwesenheit solcher Ionen führt zu einer Verteuerung des erfindungsgemäßen Verfahrens und erschwert die Abwasserbehandlung. Vorzugsweise sind solche Ionen von Metallen der Seltenen Erden ausgewählt aus der Gruppe bestehend aus Ionen von Sc, Y, La, Ce, Pr, Nd, Pm, Sm, Eu, Gb, Td, Dy, Ho, Er, Tm, Yb und Lu.

Der molare Anteil von gegebenenfalls wenigstens einer in der wässrigen Beschichtungszusammensetzung (A) enthaltenen Aminopolycarbonsäure ist wenigstens um den Faktor 15 geringer als der molare Anteil des in der wässrigen Beschichtungszusammensetzung (A) enthaltenen trivalenten Bismuts, vorzugsweise jeweils bezogen auf das Gesamtgewicht der wässrigen Zusammensetzung (A). Die Anwesenheit solcher Säuren führt zu Problemen bezüglich der Tauchbadstabilität und der Abwasserbehandlung durch eine Anreicherung dieser Verbindungen im Tauchbad,

Unter dem Begriff "Aminopolycarbonsäure" wird im Sinne der vorliegenden Erfindung vorzugsweise eine Carbonsäure verstanden, welche zwei oder mehrere Carboxyl-Gruppen, beispielsweise 2, 3, 4, 5 oder 6 Carboxyl-Gruppen aufweist, und zudem wenigstens eine Amino-Gruppe, beispielsweise wenigstens eine primäre und/oder sekundäre und/oder tertiäre Amino-Gruppe, insbesondere wenigstens eine oder wenigstens zwei tertiäre Amino-Gruppen, aufweist.

Vorzugsweise ist der molare Anteil von gegebenenfalls in der wässrigen Zusammensetzung (A) enthaltenen Aminopolycarbonsäuren wenigstens um den Faktor 20, besonders bevorzugt wenigstens um den Faktor 30 oder 40 oder 50 oder 60 oder 70 oder 80 oder 90 oder 100 oder 1 000 geringer als der molare Anteil des in der wässrigen Beschichtungszusammensetzung (A) enthaltenen trivalenten Bismuts.

### Schritt (1)

Das erfindungsgemäße Verfahren zur zumindest teilweisen Beschichtung eines elektrisch leitfähigen Substrats mit einem Elektrotauchlack umfasst wenigstens einen Schritt (1), nämlich ein Kontaktieren des als Kathode geschalteten elektrisch leitfähigen Substrats mit der wässrigen Beschichtungszusammensetzung (A).

Unter dem Begriff "Kontaktierung" bzw. "Kontaktieren" im Sinne der vorliegenden Erfindung wird vorzugsweise ein Eintauchen des mit der Beschichtungszusammensetzung (A) zumindest teilweise zu beschichtenden Substrats in die eingesetzte wässrige Beschichtungszusammensetzung (A), ein Besprühen oder Bespritzen des mit der Beschichtungszusammensetzung (A) zumindest teilweise zu beschichtenden Substrats oder ein Aufwalzen des mit der Beschichtungszusammensetzung (A) zumindest teilweise zu beschichtenden Substrats auf das Substrat verstanden. Insbesondere wird unter dem Begriff "Kontaktierung" bzw. "Kontaktieren" im Sinne der vorliegenden Erfindung ein Eintauchen des mit der Beschichtungszusammensetzung (A) zumindest teilweise zu beschichtenden Substrats in die eingesetzte wässrige Beschichtungszusammensetzung (A), verstanden.

Vorzugsweise ist das erfindungsgemäße Verfahren ein Verfahren zur zumindest teilweisen Beschichtung eines im und/oder für den Automobilbau eingesetzten elektrisch leitfähigen Substrats. Das Verfahren kann kontinuierlich in Form einer Bandbeschichtung wie beispielsweise im Coil-Coating-Verfahren oder diskontinuierlich erfolgen.

Mittels Schritt (1) des erfindungsgemäßen Verfahrens erfolgt eine zumindest teilweise Beschichtung des Substrats mit der erfindungsgemäß eingesetzten wässrigen Beschichtungszusammensetzung (A) durch eine kataphoretische Abscheidung dieser Beschichtungszusammensetzung auf der Substratoberfläche.

Schritt (1) erfolgt mittels Anlegen einer elektrischen Spannung zwischen dem Substrat und wenigstens einer Gegenelektrode. Schritt (1) des erfindungsgemäßen Verfahrens wird vorzugsweise in einem Tauchlackbad durchgeführt. Die Gegenelektrode kann sich dabei in dem Tauchlackbad befinden. Alternativ oder zusätzlich kann die Gegenelektrode auch vom Tauchlackbad separiert vorliegen, beispielsweise über eine für Anionen permeable Anionenaustauscher-Membran. Dabei können Anionen, die während der Tauchlackierung gebildet werden, aus dem Lack durch die Membran in das Anolyt abtransportiert werden, wodurch der pH-Wert im Tauchlackbad reguliert bzw. konstant gehalten werden kann. Vorzugsweise liegt die Gegenelektrode vom Tauchlackbad separiert vor.

Vorzugsweise erfolgt in Schritt (1) des erfindungsgemäßen Verfahrens eine vollständige Beschichtung des Substrats mit der erfindungsgemäß eingesetzten wässrigen Beschichtungszusammensetzung durch eine vollständige kataphoretische Abscheidung auf der gesamten Substratoberfläche.

Vorzugsweise wird in Schritt (1) des erfindungsgemäßen Verfahrens ein zumindest teilweise zu beschichtendes Substrat zumindest teilweise, vorzugsweise vollständig, in ein Tauchlackbad eingeführt und in diesem Tauchlackbad Schritt (1) durchgeführt.

In Schritt (1) des erfindungsgemäßen Verfahrens wird eine zumindest teilweise Beschichtung des Substrats durch eine zumindest teilweise kataphoretische Abscheidung der wässrigen Beschichtungszusammensetzung (A) erzielt. Die erfindungsgemäß eingesetzte wässrige Beschichtungszusammensetzung (A) wird dabei als Elektrotauchlack auf der Substratoberfläche abgeschieden.

Vorzugsweise wird die erfindungsgemäß eingesetzte wässrige Beschichtungszusammensetzung (A) mit einer elektrisch leitenden Anode und mit dem als Kathode geschalteten elektrisch leitfähigen Substrat in Berührung gebracht. Alternativ muss die wässrige Beschichtungszusammensetzung (A) nicht direkt mit einer elektrisch leitenden Anode in Berührung gebracht werden, beispielsweise wenn die Anode vom Tauchlackbad separiert vorliegt, beispielsweise über eine für Anionen permeable Anionenaustauscher-Membran.

Beim Durchgang von elektrischem Strom zwischen Anode und Kathode wird ein fest haftender Lackfilm auf der Kathode, d.h. auf dem Substrat abgeschieden.

Schritt (1) des erfindungsgemäßen Verfahrens wird vorzugsweise bei einer Tauchbadtemperatur in einem Bereich von 20 bis 45°C, noch bevorzugter in einem Bereich von 22 bis 42°C, besonders bevorzugt in einem Bereich von 24 bis 41°C, ganz besonders bevorzugt in einem Bereich von 26 bis 40°C, insbesondere bevorzugt in einem Bereich von 27 bis 39°C wie beispielsweise in einem Bereich von 28 bis 38°C durchgeführt. In einer anderen bevorzugten Ausführungsform des erfindungsgemäßen Verfahrens wird Schritt (1) bei einer Tauchbadtemperatur von höchstens 40°C, noch bevorzugter von höchstens 38°C, besonders bevorzugt von höchstens 35°C, ganz besonders bevorzugt von höchstens 34°C oder von höchstens 33°C oder von höchstens 32°C oder von höchstens 31°C oder von höchstens 30°C oder von höchstens 29°C oder von höchstens 28°C, durchgeführt. In einer weiteren anderen bevorzugten Ausführungsform des erfindungsgemäßen Verfahrens wird Schritt (1) bei einer Tauchbadtemperatur ≤ 32°C wie beispielsweise ≤ 31°C oder ≤ 30°C oder ≤ 29°C oder ≤ 28°C oder ≤ 27°C oder ≤ 26°C oder ≤ 25°C oder ≤ 24°C oder ≤ 23°C durchgeführt.

Vorzugsweise wird die erfindungsgemäß eingesetzte wässrige Beschichtungszusammensetzung (A) in Schritt (1) des erfindungsgemäßen Verfahrens so appliziert, dass die resultierende Elektrotauchlackschicht eine Trockenschichtdicke im Bereich von 5 bis 40 µm, besonders bevorzugt von 10 bis 30 µm, aufweist.

### Stufen (1a) und (1b) innerhalb des Schritts (1)

Schritt (1) des erfindungsgemäßen Verfahrens wird in wenigstens zwei aufeinanderfolgenden Stufen (1a) und (1b) durchgeführt, nämlich
(1a) bei einer angelegten Spannung in einem Bereich von 1 bis 50 V, welche über eine Dauer von wenigstens 5 Sekunden angelegt wird, und
(1b) bei einer angelegten Spannung in einem Bereich von 50 bis 400 V, unter der Bedingung, dass die in Stufe (1b) angelegte Spannung um wenigstens 10 V größer ist als die in Stufe (1a) angelegte Spannung.

Die Stufen (1a) und (1b) innerhalb des Schritts (1) des erfindungsgemäßen Verfahrens werden vorzugsweise innerhalb einem eingesetzten Tauchlackbad enthaltend die Beschichtungszusammensetzung (A) durchgeführt.

### Stufe (1a)

Während der Durchführung von Stufe (1a) bildet sich eine entsprechende Bismutangereicherte Schicht als eine Vorabscheidungsschicht auf dem elektrisch leitfähigen Substrat, welche sich beispielsweise durch Röntgenfluoreszenzanalyse nachweisen und quantifizieren lässt. Das Bismut muss dabei nicht zwingend in trivalenter Form, sondern kann alternativ oder zusätzlich auch in anderen Oxidationsstufen vorliegen. Diese Vorabscheidungsschicht ist insbesondere weitgehend frei von in der Beschichtungszusammensetzung enthaltenen Komponenten (A1) und gegebenenfalls (A2) und/oder (A3) und/oder (A5). Die so gebildete Bismutangereicherte Schicht übt vorzugsweise eine korrosionsschützende Wirkung aus, welche umso ausgeprägter ist, je größer die Bismut-Schichtauflage (in mg Bismut pro m² Oberfläche) ist. Bevorzugt werden Schichtauflagen von mindestens 10 oder mindestens 20 oder mindestens 30, besonders bevorzugt mindestens 40 oder mindestens 50 und insbesondere mindestens 100 oder mindestens 180 mg Bismut (als Metall gerechnet) pro m² Oberfläche.

Vorzugsweise wird Stufe (1a) bei einer angelegten Spannung in einem Bereich von 1 bis 45 V oder in einem Bereich von 1 bis 40 V oder in einem Bereich von 1 bis 35 V oder in einem Bereich von 1 bis 30 V oder in einem Bereich von 1 bis 25 V oder in einem Bereich von 1 bis 20 V oder in einem Bereich von 1 bis 15 V oder in einem Bereich von 1 bis 10 V oder in einem Bereich von 1 bis 5 V durchgeführt. In einer weiteren bevorzugten Ausführungsform wird Stufe (1a) bei einer angelegten Spannung in einem Bereich von 2 bis 45 V oder in einem Bereich von 2 bis 40 V oder in einem Bereich von 2 bis 35 V oder in einem Bereich von 2 bis 30 V oder in einem Bereich von 3 bis 25 V oder in einem Bereich von 3 bis 20 V oder in einem Bereich von 3 bis 15 V oder in einem Bereich von 3 bis 10 V oder in einem Bereich von 3 bis 6 V durchgeführt.

Die in Stufe (1a) angelegte Spannung wird über eine Dauer von wenigstens 5 Sekunden, vorzugsweise von wenigstens 10 oder wenigstens 15 oder wenigstens 20 oder wenigstens 25 oder wenigstens 30 oder wenigstens 40 oder wenigstens 50 Sekunden, besonders bevorzugt von wenigstens 60 oder wenigstens 70 oder wenigstens 80 oder wenigstens 90 oder wenigstens 100 Sekunden, ganz besonders bevorzugt von wenigstens 110 oder wenigstens 120 Sekunden, angelegt. Vorzugsweise beträgt die Dauer dabei maximal 300 Sekunden, besonders bevorzugt maximal 250 Sekunden und insbesondere maximal 150 Sekunden. Die Dauer bezeichnet dabei jeweils das Zeitintervall, während dessen die entsprechende Spannung während der Durchführung von Stufe (1a) aufrechterhalten wird.

In einer bevorzugten Ausführungsform wird die in Stufe (1a) angelegte Spannung über eine Dauer in einem Bereich von wenigstens 5 bis 500 Sekunden oder von 5 bis 500 Sekunden oder von 10 bis 500 Sekunden oder von 10 bis 300 Sekunden oder von wenigstens 20 bis 400 Sekunden oder von wenigstens 30 bis 300 Sekunden oder von wenigstens 40 bis 250 Sekunden oder von wenigstens 50 bis 200 Sekunden, besonders bevorzugt in einem Bereich von wenigstens 60 bis 150 Sekunden oder von wenigstens 70 bis 140 Sekunden oder von wenigstens 80 bis 130 Sekunden, angelegt.

Die Einstellung einer Spannung in einem Bereich von 1 bis 50 V, die während der Durchführung von Stufe (1a) über eine Dauer von wenigstens 10 Sekunden angelegt wird, kann galvanostatisch (konstant geregelter Strom) erfolgen. Alternativ kann diese Einstellung jedoch auch potentiostatisch (konstant geregelte Spannung) erfolgen, indem Stufe (1a) bei einem Abscheidungsstrom oder in einem Abscheidungsstrombereich durchgeführt wird, der einer entsprechenden Spannung in einem Bereich von 1 bis 50 V entspricht. Vorzugsweise liegt ein solcher Abscheidungsstrom in einem Bereich von 20 bis 400 mA, besonders bevorzugt in einem Bereich von 30 bis 300 mA oder in einem Bereich von 40 bis 250 mA oder in einem Bereich von 50 bis 220 mA, insbesondere in einem Bereich von 55 bis 200 mA. Vorzugsweise werden solche Abscheidungsstrome innerhalb der Stufe (1a) eingesetzt, wenn Substrate verwendet werden, welche eine Oberfläche im Bereich von 300 bis 500 cm², insbesondere von 350 bis 450 cm² oder 395 bis 405 cm² aufweisen.

Vorzugsweise beträgt die Abscheidungsstromdichte in Stufe (1a) mindestens 1 A/m², besonders bevorzugt mindestens 2 A/m² und insbesondere mindestens 3 A/m², vorzugsweise aber jeweils nicht mehr als 20 A/m², besonders bevorzugt jeweils nicht mehr als 10 A/m².

Vorzugsweise wird die Abscheidungsstromdichte oder der Abscheidungsstrom in Stufe (1a) dabei über eine Dauer von wenigstens 5 oder wenigstens 10 Sekunden, vorzugsweise von wenigstens 15 oder wenigstens 20 oder wenigstens 25 oder wenigstens 30 oder wenigstens 40 oder wenigstens 50 Sekunden, besonders bevorzugt von wenigstens 60 oder wenigstens 70 oder wenigstens 80 oder wenigstens 90 oder wenigstens 100 Sekunden, ganz besonders bevorzugt von wenigstens 110 oder wenigstens 120 Sekunden, angelegt. Vorzugsweise beträgt die Dauer dabei maximal 300 Sekunden, besonders bevorzugt maximal 250 Sekunden und insbesondere maximal 150 Sekunden. In einer anderen bevorzugten Ausführungsform wird die in Stufe (1a) angelegte Abscheidungsstromdichte oder der Abscheidungsstrom über eine Dauer in einem Bereich von wenigstens 10 bis 500 Sekunden oder von wenigstens 20 bis 400 Sekunden oder von wenigstens 30 bis 300 Sekunden oder von wenigstens 40 bis 250 Sekunden oder von wenigstens 50 bis 200 Sekunden, besonders bevorzugt in einem Bereich von wenigstens 60 bis 150 Sekunden oder von wenigstens 70 bis 140 Sekunden oder von wenigstens 80 bis 130 Sekunden, angelegt.

Die Spannung bzw. der Abscheidungsstrom oder die Abscheidungsstromdichte kann dabei während der genannten Dauer konstant gehalten werden. Die Spannung bzw. der Abscheidungsstrom oder die Abscheidungsstromdichte kann alternativ aber auch während der Abscheidungsdauer innerhalb von Stufe (1a) innerhalb der angegeben Minimum- und Maximalwerte im Bereich von 1 bis 50 V unterschiedliche Werte annehmen, beispielsweise hin und her pendeln oder rampen- oder stufenförmig von der Minimal- zur Maximalabscheidungsspannung ansteigen.

Die Einstellung der Spannung bzw. des Abscheidungsstroms oder der Abscheidungsstromdichte während der Durchführung von Stufe (1a) kann "plötzlich" erfolgen, also beispielsweise durch entsprechendes Umschalten an einem Gleichrichter, was eine gewisse technisch bedingte Mindestzeitdauer zum Erreichen der Sollspannung erfordert. Die Einstellung kann aber auch in Form einer Rampe erfolgen, also zumindest annähernd kontinuierlich und vorzugsweise linear über einen wählbaren Zeitraum, beispielsweise von bis zu 10, 20 30, 40, 50, 60, 120 oder 300 Sekunden. Bevorzugt ist eine Rampe von bis zu 120 Sekunden, besonders bevorzugt von bis zu 60 Sekunden. Auch eine stufenförmige Spannungserhöhung ist dabei möglich, wobei bei jeder Spannungsstufe vorzugsweise eine gewisse Haltezeit bei dieser Spannung eingehalten wird, beispielsweise 1, 5, 10 oder 20 Sekunden. Auch eine Kombination von Rampen und Stufen ist möglich.

Die Einstellung der Spannung bzw. des Abscheidungsstroms oder der Abscheidungsstromdichte in Stufe (1a) kann auch in Form von Pulsen geregelt werden, mit Zeiten ohne Strom bzw. mit einer Spannung unterhalb des Minimalwerts zwischen zwei Pulsen. Die Pulsdauer kann beispielsweise im Bereich von 0,1 bis 10 Sekunden liegen. Als "Zeitraum" für die Abscheidung wird dann vorzugsweise die Summe der Zeitdauern angesehen, bei denen die Abscheidungsspannung innerhalb der genannten Höchst- und Tiefstwerte bei der Durchführung von Schritt (1a) liegt. Rampen und Pulse können auch miteinander kombiniert werden.

### Stufe (1b)

Während der Durchführung von Stufe (1b) bildet sich auf der nach Stufe (1a) erhaltenen Vorabscheidungsschicht die eigentliche Tauchlackbeschichtung durch Abscheidung der Tauchlackkomponenten, insbesondere (A1) und gegebenenfalls (A2) und/oder (A5). Auch diese Beschichtung enthält Bismut in trivalenter Form oder alternativ oder zusätzlich in anderen Oxidationsstufen vorliegendes Bismut, welches bei einem nachfolgenden optionalen Härtungsschritt bzw. Vernetzungsschritt (6) des erfindungsgemäßen Verfahrens als Katalysator fungieren kann. Daher kann bei der Herstellung der Beschichtungszusammensetzung (A) vorzugsweise auf die Einarbeitung eines solchen Katalysators verzichtet werden.

Vorzugsweise wird Stufe (1b) bei einer angelegten Spannung in einem Bereich von 55 bis 400 V oder in einem Bereich von 75 bis 400 V oder in einem Bereich von 95 bis 400 V oder in einem Bereich von 115 bis 390 V oder in einem Bereich von 135 bis 370 V oder in einem Bereich von 155 bis 350 V oder in einem Bereich von 175 bis 330 V oder in einem Bereich von 195 bis 310 V oder in einem Bereich von 215 bis 290 V durchgeführt.

Vorzugsweise wird in Stufe (1b) in einem Zeitintervall im Bereich von 0 bis 300 Sekunden nach Beenden der Durchführung von Stufe (1a) eine Spannung im Bereich von 50 bis 400 V angelegt, vorzugsweise gegenüber einer inerten Gegenelektrode, jedoch unter der Bedingung, dass diese in Stufe (1b) angelegte Spannung um wenigstens 10 V größer ist als die zuvor in Stufe (1a) angelegte Spannung. Vorzugsweise wird diese Spannung innerhalb der Durchführung von Stufe (1b) für einen Zeitraum im Bereich von 10 bis 300 Sekunden, vorzugsweise im Bereich von 30 bis 240 Sekunden, bei wenigstens einem Wert innerhalb des genannten Spannungsbereichs von 50 bis 400 V unter der vorstehend genannten Bedingung gehalten.

Die in Stufe (1b) angelegte Spannung wird vorzugsweise über eine Dauer von wenigstens 10 Sekunden oder von wenigstens 15 oder wenigstens 20 oder wenigstens 25 oder wenigstens 30 oder wenigstens 40 oder wenigstens 50 Sekunden, besonders bevorzugt von wenigstens 60 oder wenigstens 70 oder wenigstens 80 oder wenigstens 90 oder wenigstens 100 Sekunden, ganz besonders bevorzugt von wenigstens 110 oder wenigstens 120 Sekunden, angelegt. Vorzugsweise beträgt die Dauer dabei maximal 300 Sekunden, besonders bevorzugt maximal 250 Sekunden und insbesondere maximal 150 Sekunden. Die Dauer bezeichnet dabei jeweils das Zeitintervall, während dessen die entsprechende Spannung während der Durchführung von Stufe (1b) aufrechterhalten wird.

In einer bevorzugten Ausführungsform wird die in Stufe (1b) angelegte Spannung über eine Dauer in einem Bereich von wenigstens 10 bis 500 Sekunden oder von wenigstens 20 bis 400 Sekunden oder von wenigstens 30 bis 300 Sekunden oder von wenigstens 40 bis 250 Sekunden oder von wenigstens 50 bis 200 Sekunden, besonders bevorzugt in einem Bereich von wenigstens 60 bis 150 Sekunden oder von wenigstens 70 bis 140 Sekunden oder von wenigstens 80 bis 130 Sekunden, angelegt.

Die Spannungserhöhung von Stufe (1a) zu Stufe (1b) kann "plötzlich" erfolgen, also beispielsweise durch entsprechendes Umschalten an einem Gleichrichter, was eine gewisse technisch bedingte Mindestzeitdauer zum Erreichen der Sollspannung erfordert. Die Spannungserhöhung kann aber auch in Form einer Rampe erfolgen, also zumindest annähernd kontinuierlich über einen wählbaren Zeitraum, beispielsweise von bis zu 10, 20 30, 40, 50, 60, 120 oder 300 Sekunden. Bevorzugt ist eine Rampe von bis zu 120 Sekunden, besonders bevorzugt von bis zu 60 Sekunden. Auch eine stufenförmige Spannungserhöhung ist möglich, wobei bei jeder Spannungsstufe vorzugsweise eine gewisse Haltezeit bei dieser Spannung eingehalten wird, beispielsweise 1, 5, 10 oder 20 Sekunden. Auch eine Kombination von Rampen und Stufen ist möglich.

Die Angabe eines Zeitraums wie beispielsweise eines Zeitraums im Bereich von 10 bis 300 Sekunden für das Anlegen der Spannung in Stufe (1b) in einem Bereich von 50 bis 400 V kann bedeuten, dass diese während des genannten Zeitraums konstant gehalten wird. Die Spannung kann alternativ aber auch während der Abscheidungsdauer innerhalb von Stufe (1b) innerhalb der angegeben Minimum- und Maximalwerte im Bereich von 50 bis 400 V unterschiedliche Werte annehmen, beispielsweise hin und her pendeln oder rampen- oder stufenförmig von der Minimalzur Maximalabscheidungsspannung ansteigen.

Die Spannung, d.h. Abscheidungsspannung, in Stufe (1b) kann auch in Form von Pulsen geregelt werden, mit Zeiten ohne Strom bzw. mit einer Abscheidungsspannung unterhalb des Minimalwerts zwischen zwei Pulsen. Die Pulsdauer kann beispielsweise im Bereich von 0,1 bis 10 Sekunden liegen. Als "Zeitraum" für die Abscheidung wird dann vorzugsweise die Summe der Zeitdauern angesehen, bei denen die Abscheidungsspannung innerhalb der genannten Höchst- und Tiefstwerte bei der Durchführung von Schritt (1b) liegt. Rampen und Pulse können auch miteinander kombiniert werden.

### Weitere optionale Verfahrensschritte

Gegebenenfalls umfasst das erfindungsgemäße Verfahren ferner einen Schritt (2), der vorzugsweise auf den Schritt (1) folgt, welcher wie vorstehend ausgeführt zwei Stufen (1a) und (1b) beinhaltet, nämlich
(2) ein Kontaktieren des mit der Beschichtungszusammensetzung (A) zumindest teilweise beschichteten Substrats mit einer wässrigen Sol-Gel-Zusammensetzung vor einer Aushärtung der abgeschiedenen Beschichtungszusammensetzung (A).

Dem Fachmann sind die Begriffe "Sol-Gel-Zusammensetzung", "Sol-Gel" sowie die Herstellung von Sol-Gel-Zusammensetzungen und Sol-Gelen bekannt, beispielsweise aus D. Wang et al., Progress in Organic Coatings 2009, 64, 327-338 oder S. Zheng et al., J. Sol-Gel. Sci. Technol. 2010, 54, 174-187.

Unter einer wässrigen "Sol-Gel-Zusammensetzung" im Sinne der vorliegenden Erfindung wird vorzugsweise eine wässrige Zusammensetzung verstanden, zu deren Herstellung wenigstens eine Ausgangsverbindung, welche wenigstens ein Metallatom und/oder Halbmetallatom wie beispielsweise M¹ und/oder M² und wenigstens zwei hydrolysierbare Gruppen wie beispielsweise zwei hydrolysierbare Gruppen X¹ aufweist, und welche gegebenenfalls ferner wenigstens einen nicht hydrolysierbaren organischen Rest wie beispielsweise R¹ aufweist, mit Wasser unter Hydrolyse und Kondensation umgesetzt wird. Die wenigstens zwei hydrolysierbaren Gruppen sind dabei vorzugsweise jeweils direkt an das in der wenigstens einen Ausgangsverbindung enthaltene wenigstens eine Metallatom und/oder wenigstens eine Halbmetallatom jeweils mittels einer Einfachbindung gebunden. Aufgrund der Gegenwart des nicht hydrolysierbaren organischen Restes wie beispielsweise R¹ kann eine solche erfindungsgemäß eingesetzte Sol-Gel-Zusammensetzung auch als "Sol-Gel-Hybrid-Zusammensetzung" bezeichnet werden.

Vorzugsweise ist die im optionalen Schritt (2) erfindungsgemäß eingesetzte wässrige Sol-Gel-Zusammensetzung erhältlich durch Umsetzung
wenigstens einer Verbindung Si(X¹)₃(R¹),
   wobei R¹ darin für einen nicht hydrolysierbaren organischen Rest steht, welcher wenigstens eine reaktive funktionelle Gruppe ausgewählt aus der Gruppe bestehend aus primären Amino-Gruppen, sekundären Amino-Gruppen, Epoxid-Gruppen, und Gruppen, die eine ethylenisch ungesättige Doppelbindung aufweisen, aufweist,
   insbesondere wenigstens einer Verbindung Si(X¹)₃(R¹), wobei R¹ darin für einen nicht hydrolysierbaren organischen Rest steht, welcher wenigstens eine Epoxid-Gruppe als eine reaktive funktionelle Gruppe, aufweist, und worin X¹ für eine hydrolysierbare Gruppe wie beispielsweise eine O-C₁₋₆-Alkyl-Gruppe steht und zudem
   gegebenenfalls wenigstens einer weiteren Verbindung Si(X¹)₃(R¹), wobei R¹ darin für einen nicht hydrolysierbaren organischen Rest steht, welcher wenigstens eine reaktive funktionelle Gruppe ausgewählt aus der Gruppe bestehend aus primären Amino-Gruppen und sekundären Amino-Gruppen, und worin X¹ für eine hydrolysierbare Gruppe wie beispielsweise eine O-C₁₋₆-Alkyl-Gruppe steht, aufweist,
und gegebenenfalls wenigstens einer Verbindung Si(X¹)₄, worin X¹ für eine hydrolysierbare Gruppe wie beispielsweise eine O-C₁₋₆-Alkyl-Gruppe steht,
und gegebenenfalls wenigstens einer Verbindung Si(X¹)₃(R¹),
   wobei R¹ darin für einen nicht hydrolysierbaren organischen Rest steht, welcher keine reaktive funktionelle Gruppe aufweist wie beispielsweise einen C₁₋₁₀-Alkylrest, und worin X¹ für eine hydrolysierbare Gruppe wie beispielsweise einer O-C₁₋₆-Alkyl-Gruppe steht,
und gegebenenfalls wenigstens einer Verbindung Zr(X¹)₄, worin X¹ für eine hydrolysierbare Gruppe wie beispielsweise einer O-C₁₋₆-Alkyl-Gruppe steht,
mit Wasser.

Vorzugsweise umfasst das erfindungsgemäße Verfahren ferner einen Schritt (3), der vorzugsweise auf den Schritt (1) oder auf den Schritt (2) folgt, nämlich eine
(3) Spülung des nach Schritt (1) oder Schritt (2) erhältlichen mit der wässrigen Beschichtungszusammensetzung (A) zumindest teilweise beschichteten Substrats mit Wasser und/oder mit Ultrafiltrat.

Der Begriff "Ultrafiltrat" bzw. "Ultrafiltration" insbesondere im Zusammenhang mit der Elektrotauchlackierung ist dem Fachmann bekannt und beispielsweise definiert im Römpp Lexikon, Lacke und Druckfarben, Georg Thieme Verlag 1998.

Die Durchführung des Schritts (3) ermöglicht die Rückführung überschüssiger nach Schritt (1) auf dem zumindest teilweise beschichteten Substrat befindlicher Bestandteile der erfindungsgemäß eingesetzten wässrigen Beschichtungszusammensetzung (A) in das Tauchlackbad.

Das erfindungsgemäße Verfahren kann ferner einen optionalen Schritt (4), der vorzugsweise auf den Schritt (1) oder (2) oder (3) folgt, umfassen, nämlich ein
(4) Kontaktieren des nach Schritt (1) oder Schritt (2) oder Schritt (3) erhältlichen mit der wässrigen Beschichtungszusammensetzung (A) zumindest teilweise beschichteten Substrats mit Wasser und/oder Ultrafiltrat, vorzugsweise über eine Dauer von 30 Sekunden bis zu einer Stunde, besonders bevorzugt über eine Dauer von 30 Sekunden bis zu 30 Minuten.

Das erfindungsgemäße Verfahren kann ferner einen optionalen Schritt (4a), der vorzugsweise auf den Schritt (1), insbesondere Stufe (1b), oder (2) oder (3) oder (4) folgt, umfassen, nämlich einen Schritt (4a),
(4a) Kontaktieren des nach Schritt (1) oder Schritt (2) oder Schritt (3) oder Schritt (4) erhältlichen mit der wässrigen Beschichtungszusammensetzung (A) zumindest teilweise beschichteten Substrats mit einer wässrigen Lösung oder Dispersion, vorzugsweise einer wässrigen Lösung, wenigstens eines Vernetzungskatalysators (V), vorzugsweise wenigstens eines Vernetzungskatalysators (V), der zur Vernetzung der reaktiven funktionellen Gruppen des Bindemittels (A1), insbesondere eines als Bindemittel (A1) eingesetzten Acrylat-basierten polymeren Harzes und/oder Epoxid-basierten polymeren Harzes geeignet ist.

Vorzugsweise ist die wässrige Lösung des wenigstens einen Vernetzungskatalysators (V) eine wässrige Lösung einer Bismut-Verbindung wie beispielsweise eine wässrige Lösung enthaltend eine trivalentes Bismut aufweisende Verbindung. Vorzugsweise wird an das eingesetzte elektrisch leitfähige Substrat während der Durchführung des optionalen Schritts (4a) eine kathodische Spannung gegenüber einer Anode angelegt, besonders bevorzugt in einem Bereich von 4 V bis 100 V. Die Durchführung des Schritts (4a) ermöglicht eine effiziente Vernetzung für den Fall, das eine zu geringe Menge der Komponente (A3) in der Beschichtungszusammensetzung nach Durchführung der Stufe (1a) des Schrittes (1) zurückbleibt, um in Stufe (1b) abgeschieden zu werden.

In einer bevorzugten Ausführungsform umfasst das erfindungsgemäße Verfahren ferner wenigstens einen Schritt (5), der vorzugsweise auf den Schritt (1) und/oder (2) und/oder (3) und/oder (4) und/oder (4a) folgt, aber vorzugsweise noch vor einem optionalen Schritt (6) durchgeführt wird, nämlich das
(5) Aufbringen wenigstens einer weiteren Lackschicht auf das nach Schritt (1) und/oder (2) und/oder (3) und/oder (4) und/oder (4a) erhältliche mit der erfindungsgemäß eingesetzten wässrigen Beschichtungszusammensetzung (A) zumindest teilweise beschichtete Substrat.

Mittels des Schrittes (5) können ein oder mehrere weitere Lackschichten auf das nach Schritt (1) und/oder (2) und/oder (3) und/oder (4) und/oder (4a) erhältliche und mit der Beschichtungszusammensetzung (A) zumindest teilweise beschichtete Substrat aufgebracht werden. Sollen mehrere Schichten aufgebracht werden, kann Schritt (5) entsprechend oft wiederholt werden. Beispiele weiterer aufzubringender Lackschichten sind beispielsweise Basislackschichten, Füllerschichten und/oder ein- oder mehrschichtige Decklackschichten. Dabei kann die gemäß Schritt (1) aufgebrachte wässrige Beschichtungszusammensetzung (A), gegebenenfalls nachdem sie einer Nachspülung mit einer wässrigen Sol-Gel-Zusammensetzung gemäß Schritt (2) und/oder einer optionalen Spülung mit Wasser und/oder Ultrafiltrat (gemäß Schritt (3)) unterworfen worden ist, und/oder nach Durchführung von Schritt (4) und/oder (4a) gehärtet werden, wobei diese Härtung wie nachfolgend beschrieben gemäß einem Schritt (6) erfolgt, bevor eine weitere Schicht wie eine Basislackschicht, Füllerschicht und/oder eine ein- oder mehrschichtige Decklackschicht aufgebracht wird. Alternativ kann aber die gemäß Schritt (1) aufgebrachte wässrige Beschichtungszusammensetzung (A), gegebenenfalls nachdem sie einer Nachspülung mit einer wässrigen Sol-Gel-Zusammensetzung gemäß Schritt (2) und/oder einer optionalen Spülung mit Wasser und/oder Ultrafiltrat (gemäß Schritt (3)) unterworfen worden ist und/oder nach Durchführung von Schritt (4) und/oder (4a), nicht gehärtet werden, sondern zunächst eine weitere Schicht wie eine Basislackschicht, Füllerschicht und/oder eine ein- oder mehrschichtige Decklackschicht aufgebracht werden ("Nass-in-Nass-Verfahren"). Nach Aufbringen dieser weiteren Schicht(en) wird in diesem Fall das so erhaltene Gesamtsystem gehärtet, wobei diese Härtung wie nachfolgend beschrieben vorzugsweise gemäß einem Schritt (6) erfolgen kann.

In einer bevorzugten Ausführungsform umfasst das erfindungsgemäße Verfahren ferner wenigstens einen Schritt (6), nämlich eine
(6) Aushärtung der nach Schritt (1) und/oder gegebenenfalls (2) und/oder (3) und/oder (4) und/oder (4a) zumindest teilweise auf dem Substrat aufgebrachten wässrigen Beschichtungszusammensetzung (A) oder der nach Schritt (1) und/oder gegebenenfalls (2) und/oder (3) und/oder (4) und/oder (4a) und/oder (5) zumindest teilweise auf dem Substrat aufgebrachten Beschichtung.

Schritt (6) des erfindungsgemäßen Verfahrens wird vorzugsweise mittels Einbrennen nach Schritt (1) oder gegebenenfalls (2) oder gegebenenfalls erst nach wenigstens einem weiteren Schritt (5) durchgeführt. Schritt (6) erfolgt vorzugsweise in einem Ofen. Die Aushärtung erfolgt dabei vorzugsweise bei einer Substrattemperatur im Bereich von 140°C bis 200°C, besonders bevorzugt in einem Bereich von 150°C bis 190°C, ganz besonders bevorzugt in einem Bereich von 160°C bis 180°C. Schritt (6) erfolgt vorzugsweise über eine Dauer von wenigstens 2 Minuten bis 2 Stunden, besonders bevorzugt über eine Dauer von wenigstens 5 Minuten bis 1 Stunde, ganz besonders bevorzugt über eine Dauer von wenigstens 10 Minuten bis 30 Minuten.

### Verwendung

Ein weiterer Gegenstand der vorliegenden Erfindung ist eine Verwendung der in dem erfindungsgemäßen Verfahren eingesetzten wässrigen Beschichtungszusammensetzung (A) zur zumindest teilweisen Beschichtung eines elektrisch leitfähigen Substrats mit einem Elektrotauchlack.

Alle im Zusammenhang mit der erfindungsgemäß eingesetzten wässrigen Beschichtungszusammensetzung (A) und dem erfindungsgemäßen Verfahren hierin zuvor beschriebenen bevorzugten Ausführungsformen sind auch bevorzugte Ausführungsformen der erfindungsgemäß eingesetzten wässrigen Beschichtungszusammensetzung (A) hinsichtlich ihrer Verwendung zur zumindest teilweisen Beschichtung eines elektrisch leitfähigen Substrats mit einem Elektrotauchlack.

### Zumindest teilweise beschichtetes Substrat

Ein weiterer Gegenstand der vorliegenden Erfindung ist ein zumindest teilweise mit der erfindungsgemäß eingesetzten wässrigen Beschichtungszusammensetzung (A) beschichtetes elektrisch leitfähiges Substrat.

Ein weiterer Gegenstand der vorliegenden Erfindung ist ein aus wenigstens einem solchen Substrat hergestellter vorzugsweise metallischer Gegenstand oder hergestelltes vorzugsweise metallisches Bauteil.

Solche Gegenstände können beispielsweise Metallbänder sein. Solche Bauteilen können zum Beispiel Karosserien und deren Teile von Automobilen wie Personenkraftwagen, Lastwagen, Motorrädern und Autobussen, und Bauteile von elektrischen Haushaltsprodukten oder auch Bauteilen aus dem Bereich der Geräteverkleidungen, Fassadenverkleidungen, Deckenverkleidungen oder Fensterprofilen sein.

### Bestimmungsmethoden

### 1. Salzsprühnebelprüfung gemäß DIN EN ISO 9227 NSS

Die Salzsprühnebelprüfung dient der Ermittlung der Korrosionsbeständigkeit einer Beschichtung auf einem Substrat. Die Salzsprühnebelprüfung wird gemäß DIN EN ISO 9227 NSS (Datum: 1.9.2012) für das mit einer erfindungsgemäßen Beschichtungs-zusammensetzung oder mit einer Vergleichsbeschichtungszusammensetzung beschichtete elektrisch leitfähige Substrat kaltgewalzter Stahl (CRS) durchgeführt. Die zu untersuchenden Proben werden dabei in einer Kammer, in der bei einer Temperatur von 35 °C kontinuierlich über eine Dauer von 504 bzw. 1008 Stunden eine 5%ige Kochsalzlösung mit kontrolliertem pH-Wert im Bereich von 6,5 bis 7,2 vernebelt wird. Der Nebel schlägt sich auf die zu untersuchenden Proben nieder und überzieht diese mit einem korrosiv wirkenden Salzwasserfilm.

Nach Durchführung der Salzsprühnebelprüfung gemäß DIN EN ISO 9227 NSS können die Proben zur Beurteilung ihres Blasengrades gemäß DIN EN ISO 4628-2 (Datum 1.1.2004) untersucht werden. Die Beurteilung erfolgt anhand von Kennwerten im Bereich von 0 (geringer Blasengrad) bis 5 (sehr hoher Blasengrad), wobei sowohl die Häufigkeit der Blasen als auch die Größe der Blasen bestimmt werden.

Wird die Beschichtung der zu untersuchenden Proben noch vor der Salzsprühnebelprüfung gemäß DIN EN ISO 9227 NSS mit einem Messerschnitt bis zum Substrat eingeritzt, so können die Proben hinsichtlich ihres Unterwanderungsgrades gemäß DIN EN ISO 4628-8 (Datum 1.3.2013) untersucht werden, da das Substrat während der Salzsprühnebelprüfung gemäß DIN EN ISO 9227 NSS entlang der Ritzlinie korrodiert. Diese Untersuchung erfolgt nach Durchführung der Salzsprühnebelprüfung über eine Dauer von 504 h oder über eine Dauer von 1008 h. Durch den fortschreitenden Korrosionsvorgang wird die Beschichtung während der Prüfung mehr oder weniger stark unterwandert. Der Unterwanderungsgrad in [mm] ist ein Maß für die Beständigkeit der Beschichtung gegen Korrosion.

### 2. Filiformkorrosion gemäß DIN EN 3665

Die Bestimmung der Filiformkorrosion dient der Ermittlung der Korrosionsbeständigkeit einer Beschichtung auf einem Substrat. Diese Bestimmung wird gemäß DIN EN 3665 (1.8.1997) für das mit einer erfindungsgemäßen Beschichtungszusammensetzung oder mit einer Vergleichsbeschichtungszusammensetzung beschichtete elektrisch leitfähige Substrat Aluminium (ALU) über eine Dauer von 1008 h durchgeführt. Dabei wird die jeweilige Beschichtung, ausgehend von einer linienförmigen Verletzung der Beschichtung, in Form einer linien- oder fadenförmigen Unterkorrosion unterwandert. Die maximale Fadenlänge in [mm] wird dabei gemäß DIN EN 3665 (Verfahren 3) ausgemessen. Die mittlere Fadenlänge in [mm] wird dabei gemäß PAPP WT 3102 (Daimler) (Datum 21.12.2006) bestimmt. Die maximale und mittlere Fadenlänge sind ein Maß für die Beständigkeit der Beschichtung gegen Korrosion.

### 3. VDA-Klimawechseltest nach VDA 621-415

Dieser Klimawechseltest dient der Ermittlung der Korrosionsbeständigkeit einer Beschichtung auf einem Substrat. Der Klimawechseltest wird für das mit einer erfindungsgemäß eingesetzten Beschichtungszusammensetzung oder mit einer Vergleichsbeschichtungszusammensetzung beschichtete elektrisch leitfähige Substrat kaltgewalzter Stahl (CRS) durchgeführt. Der Klimawechseltest wird dabei in 6 oder 10 sogenannten Zyklen durchgeführt. Ein Zyklus besteht dabei aus insgesamt 168 Stunden (1 Woche) und umfasst
a) 24 Stunden einer Salzsprühnebelprüfung gemäß DIN EN ISO 9227 NSS (Datum: 1.9.2012),
b) gefolgt von 8 Stunden einer Lagerung einschließlich Anwärmen gemäß DIN EN ISO 6270-2 vom September 2005, Verfahren AHT,
c) gefolgt von 16 Stunden einer Lagerung einschließlich Abkühlen gemäß DIN EN ISO 6270-2 vom September 2005, Verfahren AHT,
d) 3-fache Wiederholung von b) und c) (insgesamt also 72 Stunden), und
e) 48 Stunden einer Lagerung einschließlich Abkühlen bei belüfteter Klimakammer gemäß DIN EN ISO 6270-2 vom September 2005, Verfahren AHT.

Wird die jeweils eingebrannte Beschichtungszusammensetzung der zu untersuchenden Proben noch vor der Durchführung des Klimawechseltests mit einem Messerschnitt bis zum Substrat eingeritzt, so können die Proben hinsichtlich ihres Unterwanderungsgrades gemäß DIN EN ISO 4628-8 untersucht werden, da das Substrat während der der Durchführung des Klimawechseltests entlang der Ritzlinie korrodiert. Durch den fortschreitenden Korrosionsvorgang wird die Beschichtung während der Prüfung mehr oder weniger stark unterwandert. Der Unterwanderungsgrad in [mm] ist ein Maß für die Beständigkeit der Beschichtung.

### 4. Röntgenfluoreszenzanalyse (RFA) zur Schichtgewichtsbestimmung

Das Schichtgewicht (in mg pro m² Oberfläche) der zu untersuchenden Beschichtung wird mittels wellenlängendispersiver Röntgenfluoreszenzanalyse (RFA) nach DIN 51001 (Datum: August 2003) ermittelt. Auf diese Weise kann beispielsweise der Bismut-Gehalt bzw. die Bismut-Schichtauflage einer Beschichtung wie beispielsweise der nach Stufe (1a) von Schritt (1) des erfindungsgemäßen Verfahrens erhaltenen Beschichtung ermittelt werden. Analog kann auch der jeweilige Gehalt an anderen Elementen wie beispielsweise Zirkonium bestimmt werden. Die bei der Durchführung der Röntgenfluoreszenzanalyse erhaltenen Signale werden um einen separat gemessen Untergrund einer unbeschichteten Referenzprobe korrigiert. Es werden Bruttozählraten (in kCounts pro Sekunde) jeweils der zu bestimmenden Elemente wie Bismut bestimmt. Von den so bestimmten jeweiligen Bruttozählraten der jeweiligen Probe werden die Bruttozählraten der jeweiligen Elemente einer Referenzprobe (unbeschichtetes Substrat) subtrahiert und so die Nettozählraten der zu bestimmenden Elemente erhalten. Diese werden mittels einer elementspezifischen Transferfunktion (erhalten aus einer Kalibriermessung) in Schichtgewichte (mg/cm²) umgerechnet. Werden mehrere Schichten aufgetragen, so wird nach jedem Auftrag das jeweilige Schichtgewicht bestimmt. Bei einer Folgeschicht zählt dann jeweils die Bruttozählrate der vorangegangenen Schicht als Referenz. Mittels dieser Bestimmungsmethode erfolgt die Bestimmung des Bismut-Gehalts der nach Stufe (1a) von Schritt (1) des erfindungsgemäßen Verfahrens erhaltenen Beschichtung.

### 5. Klimawechseltest PV 210

Dieser Klimawechseltest PV 210 dient der Ermittlung der Korrosionsbeständigkeit einer Beschichtung auf einem Substrat. Der Klimawechseltest wird für das mit dem erfindungsgemäßen Verfahren oder mit einem Vergleichsverfahren beschichtete elektrisch leitfähige Substrat kaltgewalzter Stahl (CRS) durchgeführt. Der Klimawechseltest wird dabei in 30 sogenannten Zyklen durchgeführt. Ein Zyklus (24 Stunden) besteht dabei aus 4 Stunden einer Salzsprühnebelprüfung gemäß DIN EN ISO 9227 NSS (Datum: 1.9.2012), 4 Stunden einer Lagerung einschließlich Abkühlen gemäß DIN EN ISO 6270-2 vom September 2005 (Verfahren AHT) und 16 Stunden einer Lagerung einschließlich Anwärmen gemäß DIN EN ISO 6270-2 vom September 2005, Verfahren AHT bei 40±3°C und einer Luftfeuchtigkeit von 100%. Nach 5 Zyklen erfolgt jeweils eine Ruhepause von 48 Stunden einschließlich Abkühlen gemäß DIN EN ISO 6270-2 vom September 2005, Verfahren AHT. 30 Zyklen entsprechen somit einer Dauer von insgesamt 42 Tagen.

Wird die Beschichtung der zu untersuchenden Proben noch vor der Durchführung des Klimawechseltests mit einem Messerschnitt bis zum Substrat eingeritzt, so können die Proben hinsichtlich ihres Unterwanderungsgrades gemäß DIN EN ISO 4628-8 (Datum 1.3.2013) untersucht werden, da das Substrat während der der Durchführung des Klimawechseltests entlang der Ritzlinie korrodiert. Durch den fortschreitenden Korrosionsvorgang wird die Beschichtung während der Prüfung mehr oder weniger stark unterwandert. Der Unterwanderungsgrad in [mm] ist ein Maß für die Beständigkeit der Beschichtung.

Nach Durchführung des Klimawechseltests können die Proben zur Beurteilung ihres Blasengrades gemäß DIN EN ISO 4628-2 (Datum 1.1.2004) untersucht werden. Die Beurteilung erfolgt anhand von Kennwerten im Bereich von 0 (geringer Blasengrad) bis 5 (sehr hoher Blasengrad).

### 6. Bestimmung des Siebrückstands

200 mL von insgesamt 5 L der Beschichtungszusammensetzung (A) oder einer Vergleichszusammensetzung werden bei der gewählten Tauchbadtemperatur in einem 350 mL-Kunststoffbecher (Kunststoffbecher R 350 der Firma Kautex, Bodendurchmesser 7 cm) abgemessen (bis zum vierten Strich von unten) und unverzüglich, auf einmal in das hergestellte Sieb geschüttet, welches durch Einklemmen eines gewogenen Siebgewebes (10 x 10 cm großes Nylonsieb Nr. 11, Maschenweite 31 µm) zwischen zwei ineinandergeschobenen Becher (Kunststoffbecher R 350 der Firma Kautex, Bodendurchmesser 7 cm), hergestellt wird. Die Durchlaufzeit wird von Beginn des Einfüllens bis Ende des Durchlaufens ermittelt. Dann wird der Rest des 5 L Ansatzes durch den Siebbecher geschüttet. Der Eimer wird mit deionisiertem Wasser nachgespült, bis keine Rückstände mehr im Eimer haften. Das Spülwasser wird ebenfalls durch den Siebbecher geschüttet. Durch seitliches Klopfen mittels Rührstab oder ähnlichem kann ein Verstopfen des Siebes vermieden werden. Mit einer mit deionisiertem Wasser gefüllten Spritzflasche spült man Siebgewebe und Siebrückstand gut nach, entfernt das Siebgewebe aus den Kunststoffbechern und legt es, wiederum fixiert mit der Büroklammer, auf den zuvor ausgewogenen Deckel und trocknet 90 min bei 60 °C. Anschließend wird der Dosendeckel mit dem Sieb erneut gewogen und somit der Siebrückstand ermittelt. Für stabile Materialien ist die Durchlaufzeit der Siebprobe < 20 s (i.O.). Der Siebrückstand wird in mg pro 1 L Badmaterial angegeben. Ein Siebrückstand von < 50 mg/L ist als gut, ein Siebrückstand von > 50 mg/L als bedenklich zu bezeichnen.

### 7. Atomemissionsspektrometrie (ICP-OES) zur Bestimmung der Gesamtmenge des in der Beschichtungszusammensetzung (A) enthaltenen Bismuts,

Der Gehalt an bestimmten Elementen einer zu untersuchenden Probe wie beispielsweise der Gehalt an Bismut wird mittels induktiv-gekoppelter Plasma-Atom-Emissionspektrometrie (ICP-OES) gemäß DIN EN ISO 11885 (Datum: September 2009) ermittelt. Hierzu wird eine Probe der Beschichtungszusammensetzung (A) oder einer Vergleichszusammensetzung entnommen und ein Mikrowellenaufschluss dieser Probe durchgeführt: hierbei wird eine Probe der Beschichtungszusammensetzung (A) oder einer Vergleichszusammensetzung eingewogen und die flüchtigen Bestandteile dieser Probe durch Erhitzen bei einer linearen Temperaturerhöhung von 18°C auf 130°C innerhalb einer Stunde entfernt. Zu einer Menge von bis zu 0,5 g dieser so erhaltenen Probe wird eine 1:1-Mischung aus Salpetersäure (65%ig) und Schwefelsäure (96%ig) gegebenen (jeweils 5 mL von jeder der genannten Säuren) und dann ein Mikrowellenaufschluss mit einem Gerät der Firma Berghof (Gerät Speedwave IV) durchgeführt. Während des Aufschlusses wird die Probenmischung innerhalb von 20 bis 30 Minuten auf einer Temperatur von 250°C erhitzt und diese Temperatur für 10 Minuten gehalten. Nach dem Aufschluss soll die verbleibende Probenmischung eine klare Lösung ohne Festkörperanteil sein. Mittels ICP-OES gemäß DIN EN ISO 11885 wird dann der Gesamtgehalt an Bismut der Probe bestimmt. Diese wird in einem durch ein Hochfrequenzfeld erzeugtes Argonplasma thermisch angeregt und das aufgrund von Elektronenübergängen emittierte Licht als Spektrallinie der entsprechenden Wellenlänge sichtbar und mit einem optischen System analysiert. Dabei besteht eine lineare Beziehung zwischen der Intensität des emittierten Lichtes und der Konzentration des entsprechenden Elements wie Bismut. Vor Durchführung werden anhand von bekannten Elementstandards (Referenzstandards), die in Abhängigkeit von der jeweiligen zu untersuchenden Probe Kalibrierungsmessungen durchgeführt. Anhand dieser Kalibrierungen können Konzentrationen unbekannter Lösungen wie die Konzentration der Menge an Bismut wie beispielsweise die Menge an trivalentem Bismut (A4) in der Probe bestimmt werden.

Die nachfolgenden Beispiele dienen der Erläuterung der Erfindung, sind jedoch nicht einschränkend auszulegen.

Sofern nicht anders angeführt, handelt es sich bei den nachfolgenden Angaben in Prozenten jeweils um Gewichtsprozente.

### Beispiele und Vergleichsbeispiele

### 1. Herstellung von erfindungsgemäß eingesetzten wässrigen Beschichtungszusammensetzungen (Z1, Z2, Z3 und Z4 sowie Z5) sowie einer wässrigen Vergleichsbeschichtungszusammensetzung (Z6)

Eine wässrige Dispersion eines Bindemittels und eines Vernetzungsmittels (kommerziell erhältliches Produkt CathoGuard® 520 der Firma BASF mit einem Festkörpergehalt von 37,5 Gew.-%), eine Pigmentpaste (kommerziell erhältliches Produkt CathoGuard® 520 der Firma BASF mit einem Festkörpergehalt von 65,0 Gew.-%) und Anteile an deionisiertem Wasser werden zu einer Vergleichsbeschichtungszusammensetzung (Z6) zusammengegeben und unter Rühren bei Raumtemperatur (18-23°C) vermischt. Dabei werden insgesamt 2275 g CathoGuard® 520, 295 g CathoGuard® 520 Pigmentpaste und 2430 g deionisiertes Wasser eingesetzt. Die zur Herstellung von Z6 eingesetzte Pigmentpaste CathoGuard® 520 der Firma BASF enthält Bismut-Subnitrat.

Die Herstellung der erfindungsgemäß eingesetzten wässrigen Beschichtungszusammensetzungen (Z1, Z2, Z3 und Z4 sowie Z5) erfolgt analog der Herstellung der Vergleichsbeschichtungszusammensetzung (Z6), mit dem Unterschied, dass anstelle der kommerziell erhältlichen Pigmentpaste CathoGuard® 520 der Firma BASF eine Pigmentpaste P1 eingesetzt wird, und dass zusätzlich jeweils eine wasserlösliche Bismut(III)-haltige Verbindung bei der Herstellung in jede der wässrigen Beschichtungszusammensetzungen (Z1, Z2, Z3 und Z4 sowie Z5) mit eingearbeitet wird. Die Herstellung der eingesetzten Pigmentpaste P1 erfolgt dabei gemäß des in DE 10 2008 016 220 A1, Seite 7, Tabelle 1, Variante B beschriebenen Verfahrens, wobei jedoch im vorliegenden Fall zur Herstellung der Pigmentpaste P1 auf den Einsatz von Bismut-Subnitrat verzichtet wird. Somit enthält die Pigmentpaste P1 kein Bismut-Subnitrat. Als wasserlösliche Bismut(III)-haltige Verbindung wird entweder Bismut-L-(+)-Lactat (Bi1) mit einem Bismut-Gehalt von 11,7 Gew.-% oder Bismut-Lactat (Bi2), wobei als Lactat-Komponente eine Mischung aus D- und L-Lactat vorliegt, mit einem Bismut-Gehalt von 9,2 Gew.-%, oder Bismut-Dimethylpropionat (Bi3) mit einem Bismut-Gehalt von 11,9 Gew.-% eingesetzt.

Dabei werden insgesamt
- 2130 g CathoGuard® 520, 306 g P1, 2496 g deionisiertes Wasser sowie 68 g an Bi1 im Fall von (Z1)
- 2130 g CathoGuard® 520, 306 g P1, 2477 g deionisiertes Wasser sowie 87 g an Bi2 im Fall von (Z2)
- 2215 g CathoGuard® 520, 295 g P1, 2430 g deionisiertes Wasser sowie 60 g an Bi3 im Fall von (Z3)
- 2215 g CathoGuard® 520, 295 g P1, 2410 g deionisiertes Wasser sowie 80 g an Bi3 im Fall von (Z4)
- 2215 g CathoGuard® 520, 295 g P1, 2390 g deionisiertes Wasser sowie 100 g an Bi3 im Fall von (Z5)
eingesetzt.

Die Herstellung von Bi1, Bi2 und Bi3 erfolgt dabei nachstehend beschrieben:

### Herstellung von Bi1

Eine Mischung aus L-(+)-Milchsäure (88 Gew.-%-ig) (613,64 g) und deionisiertem Wasser (1314,00 g) wird vorgelegt und auf 70°C unter Rühren erhitzt. 155,30 g Bismut(III)-oxid wird zu dieser Mischung hinzugegeben, wobei die Temperatur der resultierenden Mischung auf bis zu 80°C ansteigen kann. Nach einer Stunde werden weitere 155,30 g Bismut(III)-oxid zu dieser Mischung hinzugegeben, wobei die Temperatur der resultierenden Mischung wiederum auf bis zu 80°C ansteigen kann. Nach einer weiteren Stunde werden weitere 155,30 g Bismut(III)-oxid zu dieser Mischung hinzugegeben und die resultierende Mischung wird für 3 weitere Stunden gerührt. Dann erfolgt eine Zugabe von 1003 g deionisiertem Wasser unter Rühren. Gegebenenfalls wird die resultierende Mischung nach dieser Zeitdauer auf eine Temperatur im Bereich von 30 bis 40°C gekühlt, sofern diese Temperatur noch nicht erreicht sein sollte. Anschließend wird die Reaktionsmischung filtriert (T1000 Tiefenfilter) und das Filtrat als Bi1 eingesetzt.

### Herstellung von Bi2

Die Herstellung folgt analog der für Bi1 beschriebenen Methode, mit dem Unterschied, dass anstelle von L-(+)-Milchsäure 901,00 g Milchsäure (Mischung aus D- und L-Milchsäure) in 2000 g deionisiertem Wasser vorgelegt werden. Zudem werden nach Ende der Zugabe des Bismut(III)-oxids und drei Stunden Rühren 1858 g an deionisiertem Wasser hinzugegeben.

### Herstellung von Bi3

Die Herstellung folgt analog der für Bi1 beschriebenen Methode, mit dem Unterschied, dass anstelle von L-(+)-Milchsäure 469,00 g Dimethylpropionsäure in 1077 g deionisiertem Wasser vorgelegt werden. Die Zugabe von Bismut(III)-oxid erfolgt analog in drei Chargen, wobei jedoch 77,67 g Bismut(III)-oxid pro Charge eingesetzt werden. Zudem wird die nach Beenden der Zugabe des Bismut(III)-oxids und drei Stunden des Rührens erhaltene Mischung nach optionaler Abkühlung auf eine Temperatur im Bereich von 30 bis 40°C direkt ohne weitere Zugabe von deionisiertem Wasser filtriert.

Tabelle 1 gibt einen Überblick über die so erhaltenen erfindungsgemäßen wässrigen Beschichtungszusammensetzungen Z1, Z2, Z3 und Z4 sowie Z5 und über die wässrige Vergleichsbeschichtungszusammensetzung Z6:

**Tabelle 1.**

| **Beispiele Z1-Z5 sowie Vergleichsbeispiel Z6** | **Z1** | **Z2** | **Z3** | **Z4** | **Z5** | **Z6*** |
|---|---|---|---|---|---|---|
| CathoGuard® 520 / Gew.-% | 42,60 | 42,60 | 44,30 | 44,3 | 44,3 | 45,50 |
| Bi1 / Gew.-% | 1,37 | - | - | - | - | - |
| Bi2 / Gew.-% | - | 1,74 | - | - | - | - |
| Bi3 / Gew.-% | - | - | 1,20 | 1,60 | 2,00 | - |
| Deionisiertes Wasser / Gew.-% | 49,91 | 49,54 | 48,60 | 48,20 | 47,80 | 48,60 |
| Pigmentpaste CathoGuard® 520 / Gew.-% | - | - | - | - | - | 5,90 |
| Pigmentpaste P1 / Gew.-% | 6,12 | 6,12 | 5,9 | 5,9 | 5,9 | - |
| pH-Wert | 5,93 | 5,52 | 5,52 | 5,30 | 5,30 | 5,30 |
| Leitfähigkeit / mS/cm | 2,35 | 2,23 | 2,50 | 2,70 | 2,40 | 2,19 |

| | | | | | | |
|---|---|---|---|---|---|---|
| = nicht erfindungsgemäß | | | | | | |

Die jeweiligen pH-Werte und Leitfähigkeiten werden bei einer Temperatur von Z1-Z5 bzw. Z6 im Bereich von 17,5 bis 20,9 °C ermittelt.

### 2. Herstellung von beschichteten elektrisch leitfähigen Substraten mittels einer der erfindungsgemäß eingesetzten wässrigen Beschichtungszusammensetzungen Z1-Z5 oder der Vergleichsbeschichtungszusammensetzung Z6

Die wässrigen Beschichtungszusammensetzungen Z1-Z5 sowie die Vergleichsbeschichtungszusammensetzung Z6 werden jeweils als Tauchlackbeschichtungen auf unterschiedliche Substrate appliziert. Dabei wird jede der Zusammensetzungen Z1-Z5 bzw. Z6 direkt nach ihrer Herstellung auf die unterschiedlichen Substrate appliziert.

Es werden jeweils drei Arten von Testblechen, nämlich T1 (tauchverzinkter Stahl (HDG)) und T2 (Aluminium (ALU)) sowie T3 (kaltgewalzter Stahl (CRS)) als Beispiele elektrisch leitfähiger Substrate eingesetzt. Jede Seite der jeweils eingesetzten Bleche weist eine Fläche von 10,5 cm ·19 cm auf, so dass sich eine Gesamtfläche von ca. 400 cm² ergibt.

Diese werden zunächst jeweils durch Eintauchen der Bleche in ein Bad enthaltend eine wässrige Lösung enthaltend die kommerziell erhältlichen Produkte Ridoline 1565-1 (3,0 Gew.-%) und Ridosol 1400-1 (0,3 % Gew.-%) der Firma Henkel sowie Wasser (96,7 Gew.-%) über eine Dauer von 1,5 bis 3 Minuten bei einer Temperatur von 62°C gereinigt. Danach wird eine mechanische Reinigung (mittels Pinseln) durchgeführt und die Bleche im Anschluss wiederum für eine Dauer von 1,5 Minuten erneut in das Bad eingetaucht.

Die auf diese Weise gereinigten Substrate werden im Anschluss mit Wasser (über die Dauer von 1 Minute) und deionisiertem Wasser (über die Dauer von 1 Minute) gespült.

Im direkten Anschluss wird auf jedes Blech T1, T2 bzw. T3 eine der erfindungsgemäß eingesetzten wässrigen Beschichtungszusammensetzungen Z1 bis Z5 oder eine Vergleichsbeschichtungszusammensetzung Z6 appliziert, indem das jeweilige Blech jeweils in ein entsprechendes eine der Zusammensetzungen Z1 bis Z5 bzw. Z6 enthaltenes Tauchlackbad getaucht wird. Dabei weist das Tauchlackbad jeweils eine Badtemperatur von 32°C oder 38°C auf (32°C jeweils im Fall von Z1, Z2 und Z6 und 38°C jeweils im Fall von Z3 bis Z5). Die Rührgeschwindigkeit beträgt jeweils 300 Umdrehungen pro Minute (im Fall von Z1, Z2 und Z6), 1400 Umdrehungen pro Minute (im Fall von Z3), 1900 Umdrehungen pro Minute (im Fall von Z4) oder 2400 Umdrehungen pro Minute (im Fall von Z5),

Die Beschichtung im Tauchlackbad wird dabei nach einer von zwei Verfahrensalternativen a) oder b) durchgeführt, wobei die Verfahrensparameter der einzelnen Alternativen so gewählt werden, dass nach Durchführung des Beschichtungsschritts bzw. Abscheidungsschritts und nach einem darauffolgenden Einbrennen eine Trockenschichtdicke von jeweils 20 µm erzielt wird. Die Verfahrensalternative a) ist eine nicht erfindungsgemäße Verfahrensalternative, wohingegen Verfahrensalternative b) erfindungsgemäß ist.

Die Verfahrensalternativen a) und b) sind nachfolgend erläutert:

### Verfahrensalternative a) (nicht erfindungsgemäß)

Verfahrensalternative a) sieht einen Abscheidungsschritt bzw. Beschichtungsschritt vor, bei welchem zunächst innerhalb eines Zeitintervalls von 10 Sekunden eine Spannung von 260 V eingestellt wird, welche dann solange für eine Dauer y (Haltezeit y) gehalten wird, so dass eine Beschichtung des jeweiligen Substrats in einer Trockenschichtdicke von 20 µm erzielt wird. Die Einstellung der Spannung von 260 V erfolgt dabei, indem die Spannung innerhalb des genannten Zeitintervalls von 10 Sekunden mittels einer Spannungsrampe von 0 V auf 260 V kontinuierlich linear erhöht wird. Eine Spannung von 52 V, d.h. eine Spannung > 50 V, wird somit bereits nach 2 Sekunden erreicht.

### Verfahrensalternative b) (erfindungsgemäß)

Verfahrensalternative b) sieht einen zweistufigen Abscheidungsschritt bzw. Beschichtungsschritt vor, bei welchem zunächst eine Spannung von 4 V über eine Dauer von 120 Sekunden angelegt wird (entsprechend Stufe (1a)). Im Anschluss daran wird die angelegte Spannung kontinuierlich linear von 4 V auf 260 V oder auf 240 V oder auf 220 V über eine Dauer von jeweils 10 Sekunden mittels einer Spannungsrampe erhöht. Diese Spannung von 260 V oder 240 V oder 220 V wird dann solange für eine Dauer x (Haltezeit x) gehalten, so dass eine Beschichtung des jeweiligen Substrats in einer Trockenschichtdicke von 20 µm erzielt wird.

Eine Beschichtung der Bleche T1, T2, T3 mit den erfindungsgemäß eingesetzten wässrigen Beschichtungszusammensetzungen Z1 oder Z2 oder mit der Vergleichsbeschichtungszusammensetzung Z6 erfolgt jeweils mittels jeder der Verfahrensalternativen a) und b). Eine Beschichtung der Bleche T1, T2, T3 mit den erfindungsgemäß eingesetzten wässrigen Beschichtungszusammensetzungen Z3, Z4 oder Z5 erfolgt jeweils nur mittels der erfindungsgemäßen Verfahrensalternative b).

Der nachfolgende Einbrennschritt erfolgt so, dass die erhaltenen Beschichtungen jeweils bei 175 °C (Ofentemperatur) über eine Dauer von 25 Minuten eingebrannt werden.

Insgesamt werden so 27 voneinander verschiedene beschichtete Substrate erhalten. Die Tabellen 2a, 2b, 2c, 2d und 2e geben einen Überblick über die so erhaltenen beschichteten Substrate.

**Tabelle 2a - Beschichtete Substrate gemäß erfindungsgemäßer Verfahrensalternative b)**

| | **Beispiel T1Z1b*** | **Beispiel T1Z2b⁺** | **Beispiel T1Z3b^{∼}** | **Beispiel T1Z4b^{/}** | **Beispiel T1Z5b^{∼}** | **Vergleichsbeispiel T1Z6b^{#}** |
|---|---|---|---|---|---|---|
| Substrat | T1 (HDG) | T1 (HDG) | T1 (HDG) | T1 (HDG) | T1 (HDG) | T1 (HDG) |
| eingesetzte wässrige Beschichtungszusammensetzung | Z1 | Z2 | Z3 | Z4 | Z5 | Z6 |
| Strombereich Stufe (1a), d.h. bei einer Spannung von 4 V über 120 s / mA | 59-130 | 62-154 | 70-170 | 84-182 | 91-184 | 36-78 |

| | | | | | | |
|---|---|---|---|---|---|---|
| * Dauer x = 135 s bei 260 V ⁺ Dauer x = 120 s bei 260 V ^{∼} Dauer x = 90 s bei 220 V ^{/} Dauer x = 90 s bei 240 V ^{#} Dauer x = 60 s bei 260 V | | | | | | |

**Tabelle 2b - Beschichtete Substrate gemäß erfindungsgemäßer Verfahrensalternative b)**

| | **Beispiel T2Z1b*** | **Beispiel T2Z2b⁺** | **Beispiel T2Z3b^{∼}** | **Beispiel T2Z4b^{/}** | **Beispiel T2Z5b^{∼}** | **Vergleichsbeispiel T2Z6b^{#}** |
|---|---|---|---|---|---|---|
| Substrat | T2 (ALU) | T2 (ALU) | T2 (ALU) | T2 (ALU) | T2 (ALU) | T2 (ALU) |
| eingesetzte wässrige Beschichtungszusammensetzung | Z1 | Z2 | Z3 | Z4 | Z5 | Z6 |
| Strombereich Stufe (1a), d.h. bei einer Spannung von 4 V über 120 s /mA | 59-130 | 62-154 | 70-170 | 84-182 | 91-184 | 36-78 |

| | | | | | | |
|---|---|---|---|---|---|---|
| * Dauer x = 135 s bei 260 V ⁺ Dauer x = 120 s bei 260 V ^{∼} Dauer x = 90 s bei 220 V ^{/} Dauer x = 90 s bei 240 V ^{#} Dauer x = 60 s bei 260 V | | | | | | |

**Tabelle 2c - Beschichtete Substrate gemäß erfindungsgemäßer Verfahrensalternative b)**

| | **Beispiel T3Z1b*** | **Beispiel T3Z2b⁺** | **Beispiel T3Z3b^{∼}** | **Beispiel T3Z4b^{/}** | **Beispiel T3Z5b^{∼}** | **Vergleichsbeispiel T3Z6b^{#}** |
|---|---|---|---|---|---|---|
| Substrat | T3 (CRS) | T3 (CRS) | T3 (CRS) | T3 (CRS) | T3 (CRS) | T3 (CRS) |
| eingesetzte wässrige Beschichtungszusammensetzung | Z1 | Z2 | Z3 | Z4 | Z5 | Z6 |
| Strombereich Stufe (1a), d.h. bei einer Spannung von 4 V über 120 s / mA | 59-130 | 62-154 | 70-170 | 84-182 | 91-184 | 36-78 |

| | | | | | | |
|---|---|---|---|---|---|---|
| *Dauer x = 135 s bei 260 V ⁺ Dauer x = 120 s bei 260 V ^{∼} Dauer x = 90 s bei 220 V ^{/} Dauer x = 90 s bei 240 V ^{#} Dauer x = 60 s bei 260 V | | | | | | |

**Tabelle 2d - Beschichtete Substrate gemäß nicht erfindungsgemäßer Verfahrensalternative a)**

| | **Vergleichsbeispiel T1Z1a*** | **Vergleichsbeispiel T1Z2a⁺** | **Vergleichsbeispiel T1Z6a^{#}** | **Vergleichsbeispiel T2Z1a*** | **Vergleichsbeispiel T2Z2a⁺** | **Vergleichsbeispiel T2Z6a^{#}** |
|---|---|---|---|---|---|---|
| Substrat | T1 (HDG) | T1 (HDG) | T1 (HDG) | T2 (ALU) | T2 (ALU) | T2 (ALU) |
| eingesetzte wässrige Beschichtungszusammensetzung | Z1 | Z2 | Z6 | Z1 | Z2 | Z6 |

| | | | | | | |
|---|---|---|---|---|---|---|
| * = Dauer y = 90 s ⁺ = Dauer y = 45 s ^{#} = Dauer y = 60 s | | | | | | |

**Tabelle 2e - Beschichtete Substrate gemäß nicht erfindungsgemäßer Verfahrensalternative a)**

| | **Vergleichsbeispiel T3Z1a*** | **Vergleichsbeispiel T3Z2a**⁺ | **Vergleichsbeispiel T3Z6a**^{#} |
|---|---|---|---|
| Substrat | T3 (CRS) | T3 (CRS) | T3 (CRS) |
| eingesetzte wässrige Beschichtungszusammensetzung | Z1 | Z2 | Z6 |

| | | | |
|---|---|---|---|
| * = Dauer y = 90 s ⁺ = Dauer y = 45 s ^{#} = Dauer y = 60 s | | | |

Die Trockenschichtdicken der auf die jeweiligen Substrate eingebrannten erfindungsgemäßen wässrigen Beschichtungszusammensetzungen bzw. Vergleichsbeschichtungszusammensetzungen betragen jeweils 20 µm.

Die Bismut-Schichtauflage (in mg Bismut pro m² Oberfläche) der mittels Stufe (1a) von Schritt (1) des erfindungsgemäßen Verfahrens aufgebrachten Beschichtung (entsprechend der ersten Abscheidung bei 4 V über 120 s innerhalb von Verfahrensvariante b)) kann mittels Röntgenfluoreszenzanalyse ermittelt werden.

**Tabelle 2f gibt einen entsprechenden Überblick:**

| **Beispiel / Vergleichsbeispiel** | Bismutgehalt in [mg/m²] |
|---|---|
| Beispiel T1Z1b | 79 |
| Beispiel T1Z2b | 73 |
| Beispiel T1Z3b | 29 |
| Beispiel T1Z4b | 48 |
| Beispiel T1Z5b | 136 |
| Vergleichsbeispiel T1Z6b | 0 |
| Beispiel T2Z1 b | 18 |
| Beispiel T2Z2b | 27 |
| Beispiel T2Z3b | 21 |
| Beispiel T2Z4b | 37 |
| Beispiel T2Z5b | 34 |
| Vergleichsbeispiel T2Z6b | 0 |
| Beispiel T3Z1b | 48 |
| Beispiel T3Z2b | 61 |
| Beispiel T3Z3b | 40 |
| Beispiel T3Z4b | 69 |
| Beispiel T3Z5b | 95 |
| Vergleichsbeispiel T3Z6b | 5 |

Wie aus Tabelle 2f ersichtlich ist kann mit allen erfindungsgemäß eingesetzten Beschichtungszusammensetzungen eine Beschichtung von mindestens 18 mg/m² Bi und bis zu 136 mg/m² Bi erzielt werden.

### 3. Untersuchung der Korrosionsschutzwirkung der beschichteten Substrate

Alle nachstehenden Prüfungen wurden entsprechend der vorstehend angegebenen Bestimmungsmethoden und/oder der entsprechenden Norm durchgeführt. Jeder Wert in Tabelle 3a, 3b, 3c bzw. 3d ist der Mittelwert (mit Standardabweichung) aus einer Dreifachbestimmung.

**Tabelle 3a:**

| | **Vergleichsbeispiel T3Z1a** | **Beispiel T3Z1b** | **Vergleichsbeispiel T3Z2a** | **Beispiel T3Z2b** | **Vergleichsbeispiel T3Z6a** | **Vergleichsbeispiel T3Z6b** |
|---|---|---|---|---|---|---|
| Unterwanderung [mm] gemäß DIN EN ISO 4628-8 nach 504 h einer Salzsprühnebelprüfung gemäß DIN EN ISO 9227 NSS | 3,0 | **1,5** | 2,8 | **1,2** | 4,1 | 4,1 |
| Unterwanderung [mm] gemäß DIN EN ISO 4628-8 nach 1008 h einer Salzsprühnebelprüfung gemäß DIN EN ISO 9227 NSS | 7,1 | **3,3** | 6,9 | **4,2** | 7,9 | 8,0 |

**Tabelle 3b:**

| | **Beispiel T3Z3b** | **Beispiel T3Z4b** | **Beispiel T3Z5b** |
|---|---|---|---|
| Unterwanderung [mm] gemäß DIN EN ISO 4628-8 nach 1008 h einer Salzsprühnebelprüfung gemäß DIN EN ISO 9227 NSS | **5,0** | **2,2** | **1,8** |

**Tabelle 3c:**

| | **Vergleichsbeispiel T3Z1a** | **Beispiel T3Z1b** | **Vergleichsbeispiel T3Z2a** | **Beispiel T3Z2b** | **Vergleichsbeispiel T3Z6a** | **Vergleichsbeispiel T3Z6b** |
|---|---|---|---|---|---|---|
| Unterwanderung [mm] gemäß DIN EN ISO 4628-8 nach 6 Zyklen eines VDA-Klimawechseltest nach VDA 621-415 | 6,0 | **3,2** | 6,2 | **3,3** | 7,2 | 7,0 |
| Unterwanderung [mm] gemäß DIN EN ISO 4628-8 nach 10 Zyklen eines VDA-Klimawechseltest nach VDA 621-415 | 12,2 | **5,9** | 12,7 | **7,5** | 12,7 | 12,8 |

**Tabelle 3d:**

| | **Vergleichsbeispiel T2Z1a** | **Beispiel T2Z1b** | **Vergleichsbeispiel T2Z2a** | **Beispiel T2Z2b** | **Vergleichsbeispiel T2Z6a** | **Vergleichsbeispiel T2Z6b** |
|---|---|---|---|---|---|---|
| Maximale Fadenlänge [mm] gemäß DIN EN 3365 nach 1008 h | 8,9 | **8,7** | 10,1 | **9,5** | 12,6 | 12,4 |
| Mittlere Fadenlänge [mm] gemäß PAPP WT 3102 nach Filiformkorrosion gemäß DIN EN 3365 nach 1008 h | 6,8 | **4,6** | 6,5 | **5,1** | 8,9 | 7,5 |

Wie aus den Tabellen 3a, 3b und 3c sowie 3d ersichtlich ist, zeichnen sich die mittels des erfindungsgemäßen Verfahrens mit einer erfindungsgemäß eingesetzten wässrigen Beschichtungszusammensetzung beschichteten Substrate im Vergleich zu den Vergleichsbeispielen durchweg durch eine verbesserte Korrosionsschutzwirkung aus. Insbesondere ist beispielsweise erkennbar, dass die Unterwanderung in [mm] nach Durchführung des VDA-Klimawechseltests nach VDA 621-415 (Beispiel T3Z1 b vs. Vergleichsbeispiel T3Z1 a) bzw. nach Durchführung der Salzsprühnebelprüfung gemäß DIN EN ISO 9227 NSS (Beispiel T3Z2b vs. Vergleichsbeispiel T3Z2a) um mehr als 50% geringer ausfallen kann.

### 4. Weitere Vergleichsversuche gegenüber mittels des Verfahrens gemäß EP 1884 579 A1 hergestellten Substraten

EP 1 884 579 A1 offenbart ein Verfahren zur Beschichtung von elektrisch leitfähigen Substraten, das eine zweistufige elektrische Abscheidung eines Beschichtungsmittels auf dem Substrat vorsieht. Die eingesetzte Beschichtungszusammensetzung enthält dabei im Gegensatz zu der erfindungsgemäß eingesetzten Beschichtungszusammensetzung (A) zwingend eine Zirkonium-Verbindung in einer Menge von 30 bis 20 000 ppm und kann gegebenenfalls weitere Metallatom-haltige Verbindungen wie beispielsweise eine Bismut-Verbindung enthalten. Nachfolgend wird gezeigt, dass sowohl mit in den Verfahren gemäß EP 1 884 579 A1 eingesetzten Zirkonium-haltigen Beschichtungszusammensetzungen als auch mit entsprechenden Beschichtungszusammensetzungen, die eine Kombination aus einer Zirkonium-Verbindung und einer Bismut-Verbindung enthalten, kein ausreichender Korrosionsschutz erzielt werden kann.

### 4.1 Herstellung von erfindungsgemäß eingesetzten wässrigen Beschichtungs-zusammensetzungen sowie wässrigen Vergleichsbeschichtungszusammensetzungen

### Versuchsreihe 1

Es werden die wässrigen Vergleichsbeschichtungszusammensetzungen (Z7) und (Z8) gemäß dem unter Punkt **1.** (der Rubrik "Beispiele und Vergleichsbeispiele) beschriebenen Darstellungsverfahren hergestellt.

Dabei werden insgesamt
- 1015 g CathoGuard® 520, 135 g CathoGuard® 520 Pigmentpaste, 11 g Additiv, 3826,6 g deionisiertes Wasser sowie 12,4 g an Zr1 (entsprechend 500 ppm Zirkonium) im Fall von (Z7) bzw.
- 1015 g CathoGuard® 520, 135 g CathoGuard® 520 Pigmentpaste, 11 g Additiv, 3805,6 g deionisiertes Wasser sowie 12,4 g an Zr1 (entsprechend 500 ppm Zirkonium) und 21,0 g an Bi1 (entsprechend 500 ppm Bismut) im Fall von (Z8)
eingesetzt.

Als "Zr1" wird kommerziell erhältliche Hexafluorozirkonsäure der Firma Henkel AG & Co. KGaA (enthaltend 45 Gew.-% Zr, bezogen auf Zr als Metall) eingesetzt. Das eingesetzte Additiv ist eine wässrige Lösung eines von der Firma Clariant kommerziell erhältlichen Poly(vinylalkohol-co-vinylacetats) (Mowiol® 47-88), die wie auf Seite 12, Beispiel 4.1 des europäischen Patents EP 1 192 226 B1 beschrieben hergestellt werden kann.

**Tabelle 4a gibt einen Überblick über die so erhaltenen wässrigen Vergleichsbeschichtungszusammensetzungen Z7 und Z8:**

| **Vergleichsbeschichtungszusammensetzungen Z7 und Z8** | **Z7*** | **Z8*** |
|---|---|---|
| CathoGuard® 520 / Gew.-% | 20,30 | 20,30 |
| Bi1 / Gew.-% | - | 0,42 |
| Zr1 / Gew.-% | 0,25 | 0,25 |
| Deionisiertes Wasser / Gew.-% | 76,53 | 76,11 |
| Pigmentpaste CathoGuard® 520 / Gew.-% | 2,70 | 2,70 |
| Additiv / Gew.-% | 0,22 | 0,22 |
| pH-Wert | 4,60 | 4,30 |
| Festkörpergehalt / Gew.-% | 9,90 | 9,90 |
| Leitfähigkeit / mS/cm | 1,66 | 1,46 |

| | | |
|---|---|---|
| = nicht emndungsgemäß | | |

### Versuchsreihe 2

Es werden die erfindungsgemäß eingesetzte wässrige Beschichtungszusammensetzung (Z9) sowie die wässrige Vergleichsbeschichtungszusammensetzung (Z10) gemäß dem unter Punkt 1. (der Rubrik "Beispiele und Vergleichsbeispiele) beschriebenen Darstellungsverfahren hergestellt.

Dabei werden insgesamt
- 2215 g CathoGuard® 520, 295 g CathoGuard® 520 Pigmentpaste, 24 g Additiv, 2397,6 g deionisiertes Wasser sowie 68,4 g an Bi1 (entsprechend 1600 ppm Bismut) im Fall von (Z9) bzw.
- 2215 g CathoGuard® 520, 295 g CathoGuard® 520 Pigmentpaste, 24 g Additiv, 2425,6 g deionisiertes Wasser sowie 40,4 g an Zr1 (entsprechend 1600 ppm Zirkonium) im Fall von (Z10)
eingesetzt.

**Tabelle 4b gibt einen Überblick über die so erhaltene erfindungsgemäß eingesetzte wässrige Beschichtungszusammensetzung Z9 und über die wässrige Vergleichsbeschichtungszusammensetzung Z10:**

| **Beschichtungszusammensetzung Z9 sowie Vergleichsbeschichtungszusammensetzung Z10** | **Z9** | **Z10*** |
|---|---|---|
| CathoGuard® 520 / Gew.-% | 44,30 | 44,30 |
| Bi1 / Gew.-% | 1,37 | - |
| Zr1 / Gew.-% | - | 0,81 |
| Deionisiertes Wasser / Gew.-% | 47,95 | 48,51 |
| Pigmentpaste CathoGuard® 520 / Gew.-% | 5,90 | 5,90 |
| Additiv / Gew.-% | 0,48 | 0,48 |
| pH-Wert | 4,80 | 4,70 |
| Festkörpergehalt / Gew.-% | 21,70 | 21,70 |
| Leitfähigkeit / mS/cm | 2,95 | 2,20 |

| | | |
|---|---|---|
| * = nicht erfindungsgemäß | | |

### 4.2. Herstellung von beschichteten elektrisch leitfähigen Substraten mittels der erfindungsgemäß eingesetzten wässrigen Beschichtungszusammensetzung Z9 oder der Vergleichsbeschichtungszusammensetzung Z7, Z8 oder Z10

Die wässrigen Vergleichsbeschichtungszusammensetzungen Z7, Z8 oder Z10 sowie die erfindungsgemäß eingesetzte Beschichtungszusammensetzung Z9 werden jeweils als Tauchlackbeschichtungen auf unterschiedliche Substrate gemäß dem unter Punkt **2.** (der Rubrik "Beispiele und Vergleichsbeispiele) beschriebenen Darstellungsverfahren appliziert, jedoch mit dem Unterschied, dass das Tauchlackbad jeweils eine Badtemperatur von 28°C (Z7) bzw. 30°C (Z8) bzw. 32 °C (Z9 und Z10) aufweist.

Zudem erfolgt die Beschichtung anstelle einer der Verfahrensalternativen a) oder b) gemäß einer der nachstehend beschriebenen erfindungsgemäßen Verfahrensvarianten c) (für Z7 und Z8) oder d) (für Z9 und Z10).

### Verfahrensalternative c) (erfindungsgemäße Verfahrensvariante)

Verfahrensalternative c) sieht einen zweistufigen Abscheidungsschritt bzw. Beschichtungsschritt vor, bei welchem zunächst eine erste Stromstufe über eine Dauer von 60 Sekunden galvanostatisch auf 80 mA eingestellt wird (entspricht Stufe (1a)). Im Anschluss daran wird die die dieser Stromstärke entsprechende angelegte Spannung über eine Dauer von 10 Sekunden kontinuierlich linear mittels einer Spannungsrampe auf 280 V erhöht. Diese Spannung von 280 V wird dann solange für eine Dauer x (Haltezeit x) gehalten (Stufe (1b)), so dass eine Beschichtung des jeweiligen Substrats in einer Trockenschichtdicke von 20 µm erzielt wird. Stufe (1a) wird somit galvanostatisch und Stufe (1b) potentiostatisch durchgeführt.

### Verfahrensalternative d) (erfindungsgemäße Verfahrensvariante)

Verfahrensalternative d) sieht einen zweistufigen Abscheidungsschritt bzw. Beschichtungsschritt vor, bei welchem zunächst eine erste Stromstufe über eine Dauer von 120 Sekunden galvanostatisch auf 180 mA eingestellt wird (entspricht Stufe (1a)). Im Anschluss daran wird die dieser Stromstärke entsprechende angelegte Spannung über eine Dauer von 10 Sekunden kontinuierlich linear mittels einer Spannungsrampe auf 200 V erhöht. Diese Spannung von 200 V wird dann solange für eine Dauer x (Haltezeit x) gehalten (Stufe (1b)), so dass eine Beschichtung des jeweiligen Substrats in einer Trockenschichtdicke von 20 µm erzielt wird. Stufe (1a) wird somit galvanostatisch und Stufe (1b) potentiostatisch durchgeführt.

Insgesamt werden so 12 voneinander verschiedene beschichtete Substrate erhalten. Die Tabellen 4c, 4d und 4e geben einen Überblick über die so erhaltenen beschichteten Substrate.

**Tabelle 4c - Beschichtete Substrate gemäß erfindungsgemäßer Verfahrensalternative c) oder d)**

| | **Vergleichsbeispiel T1Z7c*** | **Vergleichsbeispiel T1Z8c*** | **Beispiel T1Z9d^{#}** | **Vergleichsbeispiel T1Z10d^{#}** |
|---|---|---|---|---|
| Substrat | T1 (HDG) | T1 (HDG) | T1 (HDG) | T1 (HDG) |
| eingesetzte wässrige Beschichtungszusammensetzung | Z7 | Z8 | Z9 | Z10 |
| Spannungsbereich Stufe (1a), d.h. bei einem Strom von 80 mA (Z7, Z8) bzw. 180 mA (Z9, Z10)/V | 4-5 | 3,5-5 | 4-5 | 5-6,5 |

| | | | | |
|---|---|---|---|---|
| * Dauer x = 120 s bei 280 V ^{#} Dauer x = 120 s bei 200 V | | | | |

**Tabelle 4d - Beschichtete Substrate gemäß erfindungsgemäßer Verfahrensalternative c) oder d)**

| | **Vergleichsbeispiel T2Z7c*** | **Vergleichsbeispiel T2Z8c*** | **Beispiel T2Z9d^{#}** | **Vergleichsbeispiel T2Z10d^{#}** |
|---|---|---|---|---|
| Substrat | T2 (ALU) | T2 (ALU) | T2 (ALU) | T2 (ALU) |
| eingesetzte wässrige Beschichtungszusammensetzung | Z7 | Z8 | Z9 | Z10 |
| Spannungsbereich Stufe (1a), d.h. bei einem Strom von 80 mA (Z7, Z8) bzw. 180 mA (Z9, Z10)/V | 4-5 | 3,5-5 | 4-5 | 5-6,5 |

| | | | | |
|---|---|---|---|---|
| *Dauer x = 120 s bei 280 V ^{#} Dauer x = 120 s bei 200 V | | | | |

**Tabelle 4e - Beschichtete Substrate gemäß erfindungsgemäßer Verfahrensalternative c) oder d)**

| | **Vergleichsbeispiel T3Z7c*** | **Vergleichsbeispiel T3Z8c*** | **Beispiel T3Z9d^{#}** | **Vergleichsbeispiel T3Z10d^{#}** |
|---|---|---|---|---|
| Substrat | T3 (CRS) | T3 (CRS) | T3 (CRS) | T3 (CRS) |
| eingesetzte wässrige Beschichtungszusammensetzung | Z7 | Z8 | Z9 | Z10 |
| Spannungsbereich Stufe (1a), d.h. bei einem Strom von 80 mA (Z7, Z8) bzw. 180 mA (Z9, Z10)/V | 4-5 | 3,5-5 | 4-5 | 5-6,5 |

| | | | | |
|---|---|---|---|---|
| * Dauer x = 120 s bei 280 V ^{#} Dauer x = 120 s bei 200 V | | | | |

Die Trockenschichtdicken der auf die jeweiligen Substrate eingebrannten erfindungsgemäßen wässrigen Beschichtungszusammensetzungen bzw. Vergleichsbeschichtungszusammensetzungen betragen jeweils 20 µm.

Die Bismut-Schichtauflage (in mg Bismut pro m² Oberfläche) sowie die Zirkonium-Schichtauflage (in mg Zirkonium pro m² Oberfläche) der mittels Stufe (1a) von Schritt (1) des erfindungsgemäßen Verfahrens aufgebrachten Beschichtung (entsprechend der ersten Abscheidung innerhalb von Verfahrensvariante d) bzw. e)) können mittels Röntgenfluoreszenzanalyse gemäß der vorstehenden Bestimmungsmethode ermittelt werden. Die Bestimmung der Zirkonium-Schichtauflage erfolgt dabei analog der Methode zur Bestimmung der Bismut-Schichtauflage.

**Tabelle 4f gibt einen entsprechenden Überblick:**

| **Beispiel / Vergleichsbeispiel** | Bismutgehalt in [mg/m²] | Zirkoniumgehalt in [mg/m2] |
|---|---|---|
| Vergleichsbeispiel T1 Z7c | 0 | 1,0 |
| Vergleichsbeispiel T1 Z8c | 0 | 1,0 |
| Beispiel T1Z9d | **54,0** | 0,0 |
| Vergleichsbeispiel T1Z10d | 0 | 3,0 |
| Vergleichsbeispiel T2Z7c | 0 | 1,2 |
| Vergleichsbeispiel T2Z8c | 1,2 | 0 |
| Beispiel T2Z9d | **40,4** | 0 |
| Vergleichsbeispiel T2Z10d | 0,3 | 2,1 |
| Vergleichsbeispiel T3Z7c | 0 | 0,7 |
| Vergleichsbeispiel T3Zc | 0 | 0 |
| Beispiel T3Z9d | **59,1** | 0,5 |
| Vergleichsbeispiel T3Z10d | 0 | 0,5 |

Wie aus Tabelle 4f ersichtlich ist kann nur mit der erfindungsgemäß eingesetzten Beschichtungszusammensetzung Z9 eine signifikante Beschichtung mit Bi, insbesondere von mindestens 40 mg/m² Bi erzielt werden.

### 5. Untersuchung der Korrosionsschutzwirkung der beschichteten Substrate

Alle nachstehenden Prüfungen wurden entsprechend der vorstehend angegebenen Bestimmungsmethoden und/oder der entsprechenden Norm durchgeführt. Jeder Wert in Tabelle 5a bzw. Tabelle 5b ist der Mittelwert (mit Standardabweichung) aus einer Zweifachbestimmung.

**Tabelle 5a**

| | **Vergleichsbeispiel T3Z7c** | **Vergleichsbeispiel T3Z8c** | **Beispiel T3Z9d** | **Vergleichsbeispiel T3Z10d** |
|---|---|---|---|---|
| Substrat | T3 (CRS) | T3 (CRS) | T3 (CRS) | T3 (CRS) |
| Unterwanderung [mm] gemäß DIN EN ISO 4628-8 nach 504 h einer Salzsprühnebelprüfung gemäß DIN EN ISO 9227 NSS | 5,3 | 6,6 | **1,9** | 5,5 |
| Unterwanderung [mm] gemäß DIN EN ISO 4628-8 nach 1008 h einer Salzsprühnebelprüfung gemäß DIN EN ISO 9227 NSS | 9,0 | 10,7 | **3,0** | 10,6 |
| Unterwanderung [mm] gemäß DIN EN ISO 4628-8 nach 30 Zyklen des Klimawechseltests PV 210 | 10,1 | 9,5 | **3,8** | 9,1 |
| Unterwanderung [mm] gemäß DIN EN ISO 4628-8 nach 10 Zyklen des VDA-Klimawechseltest nach VDA 621-415 | 14,7 | 14,9 | **6,5** | 15,2 |
| Blasengrad gemäß DIN EN ISO 4628-2 nach 10 Zyklen eines VDA-Klimawechseltest nach VDA 621-415 | 1 (S5) | 0 (S0) | 0 (S0) | 4 (S2) |
| | 4 (S2-5) | 2 (S2-5) | 1 (S2) | 3 (S4) |

**Tabelle 5b:**

| **Beispiel / Vergleichsbeispiel** | Siebrückstand [g/L] | Beurteilung |
|---|---|---|
| Z7 | 0,004 | i.O. |
| Z8 | 0,051 | nicht i.O. |
| Z9 | **0,001** | i.O. |
| Z10 | 21,003 | nicht i.O. |

| | | |
|---|---|---|
| i.O. = in Ordnung | | |

Wie aus der Tabelle 5a ersichtlich ist, zeichnet sich das mittels des erfindungsgemäßen Verfahrens mit einer erfindungsgemäß eingesetzten wässrigen Beschichtungszusammensetzung beschichtete Substrat im Vergleich zu den Vergleichsbeispielen durchweg durch eine verbesserte Korrosionsschutzwirkung aus. Aus Tabelle 5b ist zudem ersichtlich, dass sich die erfindungsgemäß eingesetzte Beschichtungszusammensetzung Z9 insbesondere im Gegensatz zu Z10 durch eine ausreichende Stabilität aufgrund eines nur geringen Siebrückstands auszeichnet.

## Patentansprüche

1. Ein Verfahren zur zumindest teilweisen Beschichtung eines elektrisch leitfähigen Substrats mit einem Elektrotauchlack umfassend wenigstens einen Schritt (1),
(1) Kontaktieren des als Kathode geschalteten elektrisch leitfähigen Substrats mit einer wässrigen Beschichtungszusammensetzung (A),
wobei Schritt (1) in wenigstens zwei aufeinanderfolgenden Stufen (1a) und (1b) durchgeführt wird, nämlich
(1a) bei einer angelegten Spannung in einem Bereich von 1 bis 50 V, welche über eine Dauer von wenigstens 5 Sekunden angelegt wird, und
(1b) bei einer angelegten Spannung in einem Bereich von 50 bis 400 V, unter der Bedingung, dass die in Stufe (1b) angelegte Spannung um wenigstens 10 V größer ist als die in Stufe (1a) angelegte Spannung,
wobei die wässrige Beschichtungszusammensetzung (A)
(A1) wenigstens ein kathodisch abscheidbares Bindemittel,
(A2) gegebenenfalls wenigstens ein Vernetzungsmittel,
(A3) wenigstens eine organische Mono- oder Polycarbonsäure, welche kein(e) Stickstoffatom(e) aufweist, und/oder deren Anionen, und
(A4) trivalentes Bismut
umfasst,
wobei die wenigstens eine organische Mono- oder Polycarbonsäure (A3) und/oder deren Anionen und das trivalente Bismut als Komponente (A4) jeweils in einer solchen Menge in der wässrigen Beschichtungszusammensetzung (A) vorhanden sind, dass deren Stöchiometrie zueinander es erlaubt, dass wenigstens 50 mol-% des trivalenten Bismuts in Form eines Salzes und/oder Komplexes aus den Komponenten (A3) und (A4) vorliegt,
**dadurch gekennzeichnet, dass**
der molare Anteil von gegebenenfalls in der wässrigen Beschichtungszusammensetzung (A) enthaltenen Zirkonium-Ionen wenigstens um den Faktor 100 geringer ist als der molare Anteil des in der wässrigen Beschichtungszusammensetzung (A) enthaltenen trivalenten Bismuts, und
der molare Anteil von gegebenenfalls wenigstens einer in der wässrigen Beschichtungszusammensetzung (A) enthaltenen Aminopolycarbonsäure wenigstens um den Faktor 15 geringer ist als der molare Anteil des in der wässrigen Beschichtungszusammensetzung (A) enthaltenen trivalenten Bismuts.

2. Das Verfahren gemäß Anspruch 1, **dadurch gekennzeichnet, dass** die wässrige Beschichtungszusammensetzung (A) die Komponente (A4) in einer solchen Menge enthält, dass der Gehalt an trivalentem Bismut, berechnet als Bismut-Metall, bezogen auf das Gesamtgewicht der wässrigen Beschichtungs-zusammensetzung (A) in einem Bereich von 10 ppm bis 20 000 ppm liegt.

3. Das Verfahren gemäß Anspruch 1 oder 2, **dadurch gekennzeichnet, dass** die wenigstens eine organische Mono- oder Polycarbonsäure (A3) und/oder deren Anionen und das trivalente Bismut als Komponente (A4) jeweils in einer solchen Menge in der wässrigen Beschichtungszusammensetzung (A) vorhanden sind, dass deren Stöchiometrie zueinander es erlaubt, dass wenigstens 75 mol-% des trivalenten Bismuts in Form eines Salzes und/oder Komplexes aus den Komponenten (A3) und (A4) vorliegt.

4. Das Verfahren gemäß einem der vorstehenden Ansprüche, **dadurch gekennzeichnet, dass** die wenigstens eine organische Mono- oder Polycarbonsäure und/oder deren Anionen (A3) wenigstens eine Carboxyl-Gruppe bzw. Carboxylat-Gruppe aufweist, die an einen organischen Rest mit 1-8 Kohlenstoffatomen gebunden ist, wobei der organische Rest gegebenenfalls mit wenigstens einem Substituenten ausgewählt aus der Gruppe bestehend aus Hydroxyl-Gruppen, Ester-Gruppen und Ether-Gruppen substituiert sein kann.

5. Das Verfahren gemäß einem der vorstehenden Ansprüche, **dadurch gekennzeichnet, dass** die wenigstens eine organische Mono- oder Polycarbonsäure und/oder deren Anionen (A3) ausgewählt ist aus der Gruppe bestehend aus Mono- und Polycarbonsäuren, die in α-, β- oder γ-Stellung zur wenigstens einen Carboxyl-Gruppe bzw. Carboxylat-Gruppe eine oder zwei alkoholische Hydroxyl-Gruppe(n) oder Ester-Gruppe(n) oder Ether-Gruppe(n) aufweisen.

6. Das Verfahren gemäß einem der vorstehenden Ansprüche, **dadurch gekennzeichnet, dass** zur Herstellung der wässrigen Beschichtungszusammensetzung (A)
wenigstens eine Komponente (A3) in Form einer wässrigen Lösung mit wenigstens einer trivalentes Bismut (A4) enthaltenen Verbindung umgesetzt wird und
die so erhaltene wässrige Lösung oder Dispersion oder Suspension des Umsetzungsprodukts aus (A3) und der (A4) enthaltenen Verbindung wenigstens mit der Komponente (A1) und gegebenenfalls (A2) unter Erhalt der wässrigen Beschichtungszusammensetzung (A) vermischt wird.

7. Das Verfahren gemäß einem der vorstehenden Ansprüche, **dadurch gekennzeichnet, dass** der molare Anteil von gegebenenfalls in der wässrigen Beschichtungszusammensetzung (A) enthaltenen Ionen ausgewählt aus der Gruppe bestehend aus Ionen von Metallen der Seltenen Erden wenigstens um den Faktor 100 geringer ist als der molare Anteil des in der wässrigen Beschichtungszusammensetzung (A) enthaltenen trivalenten Bismuts.

8. Das Verfahren gemäß einem der vorstehenden Ansprüche, **dadurch gekennzeichnet, dass** das Bindemittel (A1) ein polymeres Harz ist, welches zumindest teilweise protonierte tertiäre Amino-Gruppen aufweist.

9. Das Verfahren gemäß Anspruch 8, **dadurch gekennzeichnet, dass** die tertiären Amino-Gruppen jeweils unabhängig voneinander wenigstens zwei jeweils wenigstens einfach mit einer Hydroxyl-Gruppe substituierte C₁₋₃-Alkyl-Gruppen aufweisen.

10. Das Verfahren gemäß einem der vorstehenden Ansprüche, **dadurch gekennzeichnet, dass** in Stufe (1a) eine solche Spannung angelegt wird, dass die Abscheidungsstromdichte mindestens 1 A/m² beträgt.

11. Das Verfahren gemäß einem der vorstehenden Ansprüche, **dadurch gekennzeichnet, dass** die in Stufe (1a) angelegte Spannung über eine Dauer in einem Bereich von wenigstens 5 bis 300 Sekunden angelegt wird.

12. Das Verfahren gemäß einem der vorstehenden Ansprüche, **dadurch gekennzeichnet, dass** die in Stufe (1b) angelegte Spannung im Bereich von 50 bis 400 V in einem Zeitintervall von 0 bis 300 Sekunden nach Durchführung der Stufe (1a) erfolgt und für einen Zeitraum im Bereich von 10 bis 300 Sekunden bei einem Wert innerhalb des genannten Spannungsbereichs von 50 bis 400 V aufrechterhalten wird.

13. Eine Verwendung der in dem Verfahren gemäß einem der Ansprüche 1 bis 12 eingesetzten wässrigen Beschichtungszusammensetzung (A) zur zumindest teilweisen Beschichtung eines elektrisch leitfähigen Substrats mit einem Elektrotauchlack.

14. Ein zumindest teilweise mit der wässrigen Beschichtungszusammensetzung (A) beschichtetes elektrisch leitfähiges Substrat, welches erhältlich ist durch das Verfahren gemäß einem der Ansprüche 1 bis 12.

15. Ein aus wenigstens einem Substrat gemäß Anspruch 14 hergestellter Gegenstand oder hergestelltes Bauteil.

## Claims

1. A method for at least partly coating an electrically conductive substrate with an electrocoat material, comprising at least a step (1),
(1) contacting the electrically conductive substrate, connected as cathode, with an aqueous coating composition (A),
step (1) being carried out in at least two successive stages (1a) and (1b):
(1a) at an applied voltage in a range from 1 to 50 V, which is applied over a duration of at least 5 seconds, and
(1b) at an applied voltage in a range from 50 to 400 V, with the proviso that the voltage applied in stage (1b) is greater by at least 10 V than the voltage applied in stage (1a),
the aqueous coating composition (A) comprising
(A1) at least one cathodically depositable binder,
(A2) optionally at least one crosslinking agent,
(A3) at least one organic monocarboxylic or polycarboxylic acid having no nitrogen atom(s), and/or anions thereof, and
(A4) trivalent bismuth,
the at least one organic monocarboxylic or polycarboxylic acid (A3) and/or anions thereof and the trivalent bismuth as component (A4) each being present in the aqueous coating composition (A) in an amount such that their stoichiometry to one another allows at least 50 mol% of the trivalent bismuth to be present in the form of a salt and/or complex of components (A3) and (A4),
**characterized in that**
the molar fraction of any zirconium ions present in the aqueous coating composition (A) being smaller by a factor of at least 100 than the molar fraction of trivalent bismuth present in the aqueous coating composition (A), and
the molar fraction of any aminopolycarboxylic acid present in the aqueous coating composition (A) being smaller by a factor of at least 15 than the molar fraction of trivalent bismuth present in the aqueous coating composition (A).

2. The method according to Claim 1, **characterized in that** the aqueous coating composition (A) comprises component (A4) in an amount such that the trivalent bismuth content, calculated as bismuth metal and based on the total weight of the aqueous coating composition (A), is in a range from 10 ppm to 20 000 ppm.

3. The method according to Claim 1 or 2, **characterized in that** the at least one organic monocarboxylic or polycarboxylic acid (A3) and/or anions thereof and the trivalent bismuth as component (A4) are present in the aqueous coating composition (A) in each case in an amount such that their stoichiometry to one another allows at least 75 mol% of the trivalent bismuth to be present in the form of a salt and/or complex of components (A3) and (A4).

4. The method according to any of the preceding claims, **characterized in that** the at least one organic monocarboxylic or polycarboxylic acid and/or anions thereof (A3) has at least one carboxyl group and/or carboxylate group attached to an organic radical having 1-8 carbon atoms, it being possible for the organic radical to be substituted optionally by at least one substituent selected from the group consisting of hydroxyl groups, ester groups, and ether groups.

5. The method according to any of the preceding claims, **characterized in that** the at least one organic monocarboxylic or polycarboxylic acid and/or anions thereof (A3) is selected from the group consisting of monocarboxylic and polycarboxylic acids which, in α-, β-, or γ-position to the at least one carboxyl group and/or carboxylate group, have one or two alcoholic hydroxyl groups or ester groups or ether groups.

6. The method according to any of the preceding claims, **characterized in that** the aqueous coating composition (A) is prepared by
reacting at least one component (A3) in the form of an aqueous solution with at least one compound containing trivalent bismuth (A4) and
mixing the resulting aqueous solution or dispersion or suspension of the reaction product of (A3) and the (A4)-comprising compound at least with component (A1) and optionally (A2), to give the aqueous coating composition (A).

7. The method according to any of the preceding claims, **characterized in that** the molar fraction of any ions present in the aqueous coating composition (A) that are selected from the group consisting of ions of the rare earth metals is smaller by a factor of at least 100 than the molar fraction of trivalent bismuth present in the aqueous coating composition (A).

8. The method according to any of the preceding claims, **characterized in that** the binder (A1) is a polymeric resin which has at least partly protonated tertiary amino groups.

9. The method according to Claim 8, **characterized in that** the tertiary amino groups each independently of one another have at least two C₁₋₃ alkyl groups each substituted at least singly by a hydroxyl group.

10. The method according to any of the preceding claims, **characterized in that** the voltage applied in stage (1a) is such that the deposition current density is at least 1 A/m².

11. The method according to any of the preceding claims, **characterized in that** the voltage applied in stage (1a) is applied over a duration in a range from at least 5 to 300 seconds.

12. The method according to any of the preceding claims, **characterized in that** the voltage applied in stage (1b) in the range from 50 to 400 V takes place in a time interval of 0 to 300 seconds after stage (1a) has been carried out, and is maintained for a time in the range from 10 to 300 seconds at a level within the stated voltage range of 50 to 400 V.

13. A use of the aqueous coating composition (A) used in the method according to any of Claims 1 to 12 for at least partly coating an electrically conductive substrate with an electrocoat material.

14. An electrically conductive substrate at least partly coated with the aqueous coating composition (A) and obtainable by the method according to any of Claims 1 to 12.

15. An article or component produced from at least one substrate according to Claim 14.

## Revendications

1. Procédé de revêtement au moins partiel d'un substrat électriquement conducteur avec une peinture de dépôt électrolytique comprenant au moins une étape (1),
(1) la mise en contact du substrat électriquement conducteur connecté en tant que cathode avec une composition de revêtement aqueuse (A),
l'étape (1) étant réalisée en au moins deux étapes (1a) et (1b) successives, à savoir
(1a) à une tension appliquée dans une plage allant de 1 à 50 V, qui est appliquée pendant une durée d'au moins 5 secondes, et
(1b) à une tension appliquée dans une plage allant de 50 à 400 V, à condition que la tension appliquée à l'étape (1b) soit supérieure d'au moins 10 V à la tension appliquée à l'étape (1a),
la composition de revêtement aqueuse (A) comprenant
(A1) au moins un liant déposable cathodiquement,
(A2) éventuellement au moins un agent de réticulation,
(A3) au moins un acide mono- ou polycarboxylique organique, qui ne comprend pas d'atome d'azote, et/ou ses anions, et
(A4) du bismuth trivalent,
ledit au moins un acide mono- ou polycarboxylique organique (A3) et/ou ses anions et le bismuth trivalent en tant que composant (A4) étant chacun présents en une quantité telle dans la composition de revêtement aqueuse (A) que leur stoechiométrie l'un par rapport à l'autre permette qu'au moins 50 % en moles du bismuth trivalent se présente sous la forme d'un sel et/ou d'un complexe des composants (A3) et (A4),
**caractérisé en ce que**
la proportion molaire d'ions zirconium éventuellement contenus dans la composition de revêtement aqueuse (A) est au moins 100 fois inférieure à la proportion molaire du bismuth trivalent contenu dans la composition de revêtement aqueuse (A), et
la proportion molaire d'au moins un acide aminopolycarboxylique éventuellement contenu dans la composition de revêtement aqueuse (A) est au moins 15 fois inférieure à la proportion molaire du bismuth trivalent contenu dans la composition de revêtement aqueuse (A).

2. Procédé selon la revendication 1, **caractérisé en ce que** la composition de revêtement aqueuse (A) contient le composant (A4) en une quantité telle que la teneur en bismuth trivalent, calculée en tant que bismuth métallique, par rapport au poids total de la composition de revêtement aqueuse (A), se situe dans une plage allant de 10 ppm à 20 000 ppm.

3. Procédé selon la revendication 1 ou 2, **caractérisé en ce que** ledit au moins un acide mono- ou polycarboxylique organique (A3) et/ou ses anions et le bismuth trivalent en tant que composant (A4) sont chacun présents en une quantité telle dans la composition de revêtement aqueuse (A) que leur stoechiométrie l'un par rapport à l'autre permette qu'au moins 75 % en moles du bismuth trivalent se présente sous la forme d'un sel et/ou d'un complexe des composants (A3) et (A4).

4. Procédé selon l'une quelconque des revendications précédentes, **caractérisé en ce que** ledit au moins un acide mono- ou polycarboxylique organique et/ou ses anions (A3) comprennent au moins un groupe carboxyle ou un groupe carboxylate, qui est relié à un radical organique de 1 à 8 atomes de carbone, le radical organique pouvant éventuellement être substitué avec au moins un substituant choisi dans le groupe constitué par les groupes hydroxyle, les groupes ester et les groupes éther.

5. Procédé selon l'une quelconque des revendications précédentes, **caractérisé en ce que** ledit au moins un acide mono- ou polycarboxylique organique et/ou ses anions (A3) sont choisis dans le groupe constitué par les acides mono- et polycarboxyliques qui comprennent en position α, β ou γ par rapport audit au moins un groupe carboxyle ou groupe carboxylate un ou deux groupes hydroxyle alcooliques ou groupes ester ou groupes éther.

6. Procédé selon l'une quelconque des revendications précédentes, **caractérisé en ce que**, pour la fabrication de la composition de revêtement aqueuse (A),
au moins un composant (A3) est mis en réaction sous la forme d'une solution aqueuse avec au moins un composé contenant du bismuth trivalent (A4), et
la solution ou dispersion ou suspension aqueuse ainsi obtenue du produit de réaction de (A3) et du composé contenant (A4) est mélangée au moins avec le composant (A1) et éventuellement (A2) pour obtenir la composition de revêtement aqueuse (A).

7. Procédé selon l'une quelconque des revendications précédentes, **caractérisé en ce que** la proportion molaire des ions éventuellement contenus dans la composition de revêtement aqueuse (A) choisis dans le groupe constitué par les ions de métaux de terres rares est au moins 100 fois inférieure à la proportion molaire du bismuth trivalent contenu dans la composition de revêtement aqueuse (A).

8. Procédé selon l'une quelconque des revendications précédentes, **caractérisé en ce que** le liant (A1) est une résine polymère qui comprend des groupes amino tertiaires au moins partiellement protonés.

9. Procédé selon la revendication 8, **caractérisé en ce que** les groupes amino tertiaires comprennent chacun indépendamment les uns des autres au moins deux groupes alkyle en C₁₋₃ chacun substitués au moins une fois avec un groupe hydroxyle.

10. Procédé selon l'une quelconque des revendications précédentes, **caractérisé en ce qu'**à l'étape (1a), une tension telle que la densité de courant de dépôt soit d'au moins 1 A/m² est appliquée.

11. Procédé selon l'une quelconque des revendications précédentes, **caractérisé en ce que** la tension appliquée à l'étape (1a) est appliquée pendant une durée dans une plage allant d'au moins 5 à 300 secondes.

12. Procédé selon l'une quelconque des revendications précédentes, **caractérisé en ce que** la tension appliquée à l'étape (1b) a lieu dans la plage allant de 50 à 400 V dans un intervalle de temps de 0 à 300 secondes après la réalisation de l'étape (1a) et est maintenue pendant une durée dans la plage allant de 10 à 300 secondes à une valeur dans la plage de tension mentionnée de 50 à 400 V.

13. Utilisation de la composition de revêtement aqueuse (A) utilisée dans le procédé selon l'une quelconque des revendications 1 à 12 pour le revêtement au moins partiel d'un substrat électriquement conducteur avec une peinture de dépôt électrolytique.

14. Substrat électriquement conducteur au moins partiellement revêtu avec la composition de revêtement aqueuse (A), qui peut être obtenu par le procédé selon l'une quelconque des revendications 1 à 12.

15. Article ou composant fabriqué à partir d'au moins un substrat selon la revendication 14.
